(19) Europäisches Patentamt
European Patent Office
Office européen des brevets

(11) **EP 4 282 278 A1**

(12) **EUROPEAN PATENT APPLICATION**
published in accordance with Art. 153(4) EPC

(43) Date of publication:
**29.11.2023 Bulletin 2023/48**

(21) Application number: **22767219.3**

(22) Date of filing: **10.03.2022**

(51) International Patent Classification (IPC):
***A23L 27/10*** *(2016.01)*

(52) Cooperative Patent Classification (CPC):
**A23L 27/10**

(86) International application number:
**PCT/JP2022/010464**

(87) International publication number:
**WO 2022/191265 (15.09.2022 Gazette 2022/37)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.03.2021 JP 2021040710**

(71) Applicant: **Mizkan Holdings Co., Ltd.
Handa-shi, Aichi 475-8585 (JP)**

(72) Inventors:
• **KATSUKI, Mao
Handa-shi, Aichi 475-8585 (JP)**
• **SAKANO, Yuka
Handa-shi, Aichi 475-8585 (JP)**

(74) Representative: **Hasegawa, Kan
Patentanwaltskanzlei Hasegawa
Untere Hauptstraße 56
85354 Freising (DE)**

(54) **COMPOSITION CONTAINING DEHYDRATED EDIBLE PLANT AND PRODUCTION METHOD AND STORABILITY ENHANCEMENT METHOD THEREFOR**

(57) The present invention provides a composition containing a dried edible plant which contains a specific amount of $\gamma$-terpinene and in which hay-like odor is suppressed. The present invention relates to a composition containing a dried edible plant in which $\gamma$-terpinene is contained, the composition satisfying all of following characteristics (1) to (4): (1) a total content of straight-chain fatty acids having 6 and/or 7 carbon atoms is 0.05 to 200 000 ppb in terms of dry mass; (2) a content of $\gamma$-terpinene is 0.01 to 100 000 ppb in terms of dry mass; (3) a ratio of the total content of straight-chain fatty acids having 6 and/or 7 carbon atoms to the content of $\gamma$-terpinene is 0.001 mass% or more in terms of dry mass; and (4) a water content on a dry basis is less than 30 mass%.

EP 4 282 278 A1

**Description**

Technical Field

The present invention relates to a composition containing a dried edible plant, a method for producing the composition, and a method for enhancing storability of the composition.

Background Art

Heretofore known techniques for suppressing the degradation odor of food include a technique of adding a lower fatty acid to a food having a heat degradation odor (Patent Literature 1), and a technique of adding a saccharide composition which contains a saccharide component having a glucose polymerization degree of 10 or more and which is not gelled at a low temperature to a food/drink containing a sulfur-containing amino acid and/or an unsaturated fatty acid (Patent Literature 2).

Citations

Patent Literatures

    [Patent Literature 1] JP 2017-225417-A
    [Patent Literature 2] JP 2008-295335-A

Summary of the Invention

Problem to be Solved

However, the technique of Patent Literature 1 is a method of suppressing the degradation odor generated during heating and drying powdery soy sauce, yeast extract or the like with using a lower fatty acid such as isovaleric acid or isobutyric acid. The technique of Patent Literature 2 is intended to suppress the heat degradation odor of milk or dairy products by adding a specific saccharide composition. Thus, these techniques are not applicable to the degradation odor of a dried product of an edible plant such as a vegetable or fruit.
The present invention aims to provide a means for suppressing the hay-like odor generated in a dried edible plant containing γ-terpinene.

Solution to Problem

The present inventors have conducted extensive studies to develop a means for suppressing the hay-like odor generated in a dried edible plant containing γ-terpinene, and found that setting each of the total content of specific straight-chain fatty acids and the ratio of the total content of specific straight-chain fatty acids to the content of γ-terpinene in a predetermined range serves to suppress the hay-like odor of a dried edible plant containing γ-terpinene, to solve the above-described problem, thereby completing the present invention.
That is, the present invention provides the following inventions [1] to [22].

    [1] A composition comprising a dried edible plant and satisfying all of following characteristics (1) to (4):

        (1) a total content of straight-chain fatty acids having 6 and/or 7 carbon atoms is 0.05 ppb or more, or 0.10 ppb or more or 0.50 ppb or more, or 1.00 ppb or more, or 3.00 ppb or more, or 5.00 ppb or more, or 7.00 ppb or more, or 9.00 ppb or more, or 10.0 ppb or more, or 12.0 ppb or more, or 15.0 ppb or more, or 18.0 ppb or more, or 20.0 ppb or more, or 50.0 ppb or more, or 90.0 ppb or more, or 200 ppb or more, or 500 ppb or more, in terms of dry mass, and the upper limit thereof is not limited, and is normally 200 000 ppb or less, or 180 000 ppb or less, or 150 000 ppb or less, or 120 000 ppb or less, or 90 000 ppb or less, or 60 000 ppb or less, or 30 000 ppb or less, or 10 000 ppb or less;
        (2) a content of γ-terpinene is 0.01 ppb or more, or 0.03 ppb or more, or 0.05 ppb or more, or 0.10 ppb or more, or 0.20 ppb or more, or 0.30 ppb or more, or 0.40 ppb or more, or 0.50 ppb or more, or 1.00 ppb or more, or 5.00 ppb or more, or 10.0 ppb or more, or 15.0 ppb or more, or 20.0 ppb or more, or 30.0 ppb or more, or 40.0 ppb or more, or 50.0 ppb or more, or 80.0 ppb or more, or 100 ppb or more, or 150 ppb or more, or 200 ppb or more, or 400 ppb or more, or 600 ppb or more, or 800 ppb or more, or 1 000 ppb or more, or 1 200 ppb or more, or 1 500 ppb or more, or 2 000 ppb or more, in terms of dry mass, and the upper limit thereof is not limited, and is normally 100 000 ppb or less, or 80 000 ppb or less, or 60 000 ppb or less, or 50 000 ppb or less, or 40 000 ppb or less, or 30 000 ppb or less, or 20 000 ppb or less, or 15 000 ppb or less, or 10 000 ppb or less, or 9 000 ppb or less;

(3) a ratio of the total content of the straight-chain fatty acids having 6 and/or 7 carbon atoms to the content of $\gamma$-terpinene is 0.001 mass% or more, or 0.002 mass% or more, or 0.003 mass% or more, or 0.004 mass% or more, or 0.005 mass% or more, or 0.006 mass% or more, or 0.007 mass% or more, or 0.008 mass% or more, or 0.009 mass% or more, or 0.010 mass% or more, or 0.040 mass% or more, or 0.060 mass% or more, or 0.080 mass% or more, or 0.10 mass% or more, or 0.30 mass% or more, or 0.60 mass% or more, or 1.00 mass% or more, or 2.00 mass% or more, or 3.00 mass% or more, or 4.00 mass% or more, or 5.00 mass% or more, or 6.00 mass% or more, in terms of dry mass, and the upper limit thereof is not particularly limited, and is normally less than 10 000 mass%, or less than 8 000 mass%, or less than 6 000 mass%, or less than 5 500 mass%, or less than 4 500 mass%, or less than 4 000 mass%, or less than 3 500 mass%, or less than 3 000 mass%, or less than 2 500 mass%, or less than 2 000 mass%, or less than 1 500 mass%, or less than 1 000 mass%, or less than 900 mass%, or less than 800 mass%, or less than 700 mass%, or less than 600 mass%, or less than 500 mass%, or less than 400 mass%, or less than 300 mass%, or less than 200 mass%, or less than 180 mass%, or less than 170 mass%, or less than 160 mass%, or less than 150 mass%, or less than 140 mass%; and

(4) a water content on a dry basis is less than 30 mass%, or less than 25 mass%, or less than 20 mass%, or less than 15 mass%, or less than 10 mass%, and the lower limit thereof is normally 0.5 mass% or more, or 1.0 mass% or more, or 1.5 mass% or more, or 2.0 mass% or more.

[2] The composition comprising a dried edible plant according to [1], wherein a content of $\beta$-ionone is 0.01 ppb or more, or 0.05 ppb or more, or 0.10 ppb or more, or 0.50 ppb or more, or 1.0 ppb or more, in terms of dry mass, and the upper limit is normally 50 000 ppb or less, or 30 000 ppb or less, or 20 000 ppb or less, or 10 000 ppb or less, or 5 000 ppb or less, or 1 000 ppb or less.

[3] The composition comprising a dried edible plant according to [1] or [2], wherein a ratio of the content of $\beta$-ionone to the content of $\gamma$-terpinene is 0.001 mass% or more, or 0.002 mass% or more, or 0.003 mass% or more, or 0.004 mass% or more, or 0.005 mass% or more, or 0.006 mass% or more, or 0.007 mass% or more, or 0.008 mass% or more, or 0.009 mass% or more, or 0.010 mass% or more, in terms of dry mass, and the upper limit thereof is not particularly limited, and is, for example, normally less than 12 000 mass%, or less than 10 000 mass%, or less than 8 000 mass%, or less than 6 000 mass%, or less than 3 000 mass%, or less than 1 000 mass%, or less than 900 mass%, or less than 800 mass%, or less than 700 mass%, or less than 600 mass%, or less than 550 mass%, or 500 mass% or less, or less than 400 mass%, or less than 300 mass%, or less than 200 mass%, or less than 100 mass%, or less than 30 mass%, or less than 10 mass%, or less than 5 mass%.

[4] The composition comprising a dried edible plant according to any one of [1] to [3], wherein a ratio of a $\beta$-caryophyllene peak area value to a total peak area value of the straight-chain fatty acids having 6 and/or 7 carbon atoms, when measured by extracting a volatile component at a sample temperature of 80°C for 20 minutes using solid phase micro extraction-gas chromatography mass spectrometry, is more than 0.0002%, or more than 0.0005%, or more than 0.0008%, or more than 0.0010%, or more than 0.0020%, or more than 0.0030%, or more than 0.0040%, or more than 0.0050%, or more than 0.010%, or more than 0.050%, or more than 0.10%, or more than 0.50%, or more than 1.0%, or more than 5.0%, or more than 10.0%, and the upper limit thereof is not particularly limited, and is, for example, normally less than 10 000%, or less than 9 000%, or less than 8 000%, or less than 7 000%, or less than 6 000%, or less than 5 000%, or less than 4 000%, or less than 3 000%, or less than 2 000%, or less than 1 000%, or less than 500%, particularly less than 300%.

[5] The composition comprising a dried edible plant according to any one of [1] to [4], wherein a ratio of a content of a straight-chain fatty acid having 7 carbon atoms to a content of a straight-chain fatty acid having 6 carbon atoms is less than 200 mass%, or less than 195 mass%, or less than 190 mass%, or less than 185 mass%, or less than 180 mass%, or less than 175 mass%, or less than 170 mass%, or less than 165 mass%, or less than 160 mass%, or less than 155 mass%, or 150 mass% or less, and the lower limit thereof is not particularly limited, and is normally 0 mass% or more, or 1 mass% or more, or 3 mass% or more, or 5 mass% or more.

[6] The composition comprising a dried edible plant according to any one of [1] to [5], which is a ground composition in a dry-ground state.

[7] The composition comprising a dried edible plant according to any one of [1] to [6], wherein the edible plant is a $\gamma$-terpinene-containing edible plant in which the content of $\gamma$-terpinene is 0.01 ppb or more, or 0.03 ppb or more, or 0.05 ppb or more, or 0.10 ppb or more, or 0.20 ppb or more, or 0.30 ppb or more, or 0.40 ppb or more, or 0.50 ppb or more, or 1.00 ppb or more, or 5.00 ppb or more, or 10.0 ppb or more, or 15.0 ppb or more, or 20.0 ppb or more, or 30.0 ppb or more, or 40.0 ppb or more, or 50.0 ppb or more, or 80.0 ppb or more, or 100 ppb or more, or 150 ppb or more, or 200 ppb or more, or 400 ppb or more, or 600 ppb or more, or 800 ppb or more, or 1 000 ppb or more, or 1 200 ppb or more, or 1 500 ppb or more, or 2 000 ppb or more, in terms of dry mass, and the upper limit thereof is not limited, and is normally 100 000 ppb or less, or 80 000 ppb or less, or 60 000 ppb or less, or 50 000 ppb or less, or 40 000 ppb or less, or 30 000 ppb or less, or 20 000 ppb or less, or 15 000 ppb or less, or 10 000 ppb or less, or 9 000 ppb or less.

[8] The composition comprising a dried edible plant according to any one of [1] to [7], wherein the edible plant includes one or more edible plants selected from the group consisting of vegetables, fruits and nuts.

[9] The composition comprising a dried edible plant according to any one of [1] to [8], wherein the edible plant includes an umbellifer.

[10] The composition comprising a dried edible plant according to any one of [1] to [9], wherein the edible plant includes one or more edible plants selected from the group consisting of carrot, celery, parsley, cicely and coriander.

[11] The composition comprising a dried edible plant according to any one of [1] to [10], wherein a specific surface area per unit volume of the composition containing a dried edible plant after ultrasonication in a 2 mass% ethanol dispersion liquid is 0.02 $m^2$/mL or more, or 0.03 $m^2$/mL or more, or 0.04 $m^2$/mL or more, or 0.05 $m^2$/mL or more, or 0.10 $m^2$/mL or more, or 0.15 $m^2$/mL or more, and the upper limit thereof is not limited, and is normally 2.00 $m^2$/mL or less, or 1.90 $m^2$/mL or less, or 1.80 $m^2$/mL or less.

[12] The composition comprising a dried edible plant according to any one of [1] to [11], wherein a ratio of a specific surface area per unit volume ($\gamma_B$) of the composition containing a dried edible plant before ultrasonication in a 2 mass% ethanol dispersion liquid to a specific surface area per unit volume ($\gamma_A$) of the composition after ultrasonication, ($\gamma_B/\gamma_A$), is 0.99 or less, or 0.95 or less, or 0.90 or less, or 0.85 or less, or 0.80 or less, and the lower limit thereof is 0.01 or more, or 0.10 or more.

[13] The composition comprising a dried edible plant according to any one of [1] to [12], wherein a number-based average diameter of the composition comprising a dried edible plant after ultrasonication in a 2 mass% ethanol dispersion liquid is less than 30 $\mu$m, or 25 $\mu$m or less, or 20 $\mu$m or less, or 15 $\mu$m or less, or 10 $\mu$m or less, and the lower limit thereof is normally 0.1 $\mu$m or more.

[14] The composition comprising a dried edible plant according to any one of [1] to [13], wherein a hue in the Munsell color system is from 0 YR to 10 YR, or from 0 Y to 5 Y, or from 0 YR to 10 YR, or from 2.5 YR to 10 YR, or from 2.5 YR to 7.5 YR, or from 5.0 YR to 7.5 YR.

[15] The composition comprising a dried edible plant according to any one of [1] to [14], wherein a color value in the Munsell color system is less than 9.0, or less than 8.5, and the lower limit thereof is not particularly limited, and is 1.0 or more, or 3.0 or more, or 5.0 or more.

[16] The composition comprising a dried edible plant according to any one of [1] to [15], wherein a chroma in the Munsell color system is more than 4, or more than 5, or more than 6, or more than 7, and the upper limit is not particularly limited, and is normally 14 or less.

[17] A food/drink comprising the composition comprising a dried edible plant according to any one of [1] to [16] at 10 mass% or more, or 20 mass% or more, or 30 mass% or more, or 40 mass% or more, and normally 100 mass% or less, although there is no particular limitation on the upper limit thereof.

[18] A method for producing the composition comprising a dried edible plant according to any one of [1] to [16], the method comprising: crushing an edible plant in which a content of $\gamma$-terpinene is 0.01 ppb or more, or 0.03 ppb or more, or 0.05 ppb or more, or 0.10 ppb or more, or 0.20 ppb or more, or 0.30 ppb or more, or 0.40 ppb or more, or 0.50 ppb or more, or 1.00 ppb or more, or 5.00 ppb or more, or 10.0 ppb or more, or 15.0 ppb or more, or 20.0 ppb or more, or 30.0 ppb or more, or 40.0 ppb or more, or 50.0 ppb or more, or 80.0 ppb or more, or 100 ppb or more, or 150 ppb or more, or 200 ppb or more, or 400 ppb or more, or 600 ppb or more, or 800 ppb or more, or 1 000 ppb or more, or 1 200 ppb or more, or 1 500 ppb or more, or 2 000 ppb or more, in terms of dry mass, and the upper limit thereof is 100 000 ppb or less, or 80 000 ppb or less, or 60 000 ppb or less, or 50 000 ppb or less, or 40 000 ppb or less, or 30 000 ppb or less, or 20 000 ppb or less, or 15 000 ppb or less, or 10 000 ppb or less, or 9 000 ppb or less; incorporating straight-chain fatty acids having 6 and/or 7 carbon atoms so that a total content thereof is 0.05 ppb or more, or 0.10 ppb or more, or 0.50 ppb or more, or 1.00 ppb or more, or 3.00 ppb or more, or 5.00 ppb or more, or 7.00 ppb or more, or 9.00 ppb or more, or 10.0 ppb or more, or 12.0 ppb or more, or 15.0 ppb or more, or 18.0 ppb or more, particularly 20.0 ppb or more in terms of dry mass, the upper limit thereof is 200 000 ppb or less, or 180 000 ppb or less, or 150 000 ppb or less, or 120 000 ppb or less, or 90 000 ppb or less, or 60 000 ppb or less, or 30 000 ppb or less, a ratio of the total content of the straight-chain fatty acids having 6 and/or 7 carbon atoms to the content of $\gamma$-terpinene is 0.001 mass% or more, or 0.002 mass% or more, or 0.003 mass% or more, or 0.004 mass% or more, or 0.005 mass% or more, or 0.006 mass% or more, or 0.007 mass% or more, or 0.008 mass% or more, or 0.009 mass% or more, or 0.010 mass% or more, or 0.040 mass% or more, or 0.060 mass% or more, or 0.080 mass% or more, or 0.10 mass% or more, or 0.30 mass% or more, or 0.60 mass% or more, or 1.00 mass% or more, or 2.00 mass% or more, or 3.00 mass% or more, or 4.00 mass% or more, or 5.00 mass% or more, or 6.00 mass% or more, in terms of dry mass, and the upper limit thereof is not particularly limited, and is, for example, normally less than 10 000 mass%, or less than 8 000 mass%, or less than 6 000 mass%, or less than 5 500 mass%, or less than 4 500 mass%, or less than 4 000 mass%, or less than 3 500 mass%, or less than 3 000 mass%, or less than 2 500 mass%, or less than 2 000 mass%, or less than 1 500 mass%, or less than 1 000 mass%, or less than 900 mass%, or less than 800 mass%, or less than 700 mass%, or less than 600 mass%, or less than 500 mass%, or less than 400 mass%, or less than 300 mass%, or less than 200 mass%, or less than 180 mass%, or less than 170 mass%, or less than 160 mass%, or less than 150 mass%, or less than 140 mass%; and drying the edible plant at any stage until a water content on a dry basis is less than 30 mass%, or less than 25 mass%, or less than 20 mass%, or less than 15 mass%, or less than 10 mass%, and the lower limit thereof is not limited, and is normally 0.5 mass% or more, or 1.0 mass% or more, or 1.5 mass% or more, or 2.0 mass% or more.

[19] The production method according to [18], wherein the ratio of the total content of the straight-chain fatty acids having 6 and/or 7 carbon atoms to the content of $\gamma$-terpinene further increases during the drying treatment.

[20] The production method according to [18] or [19], wherein the crushing treatment is dry crushing treatment.

[21] The production method according to any one of [18] to [20], wherein a percentage of increase in total content of the straight-chain fatty acids having 6 and/or 7 carbon atoms to the content of $\gamma$-terpinene after the drying treatment is 100 mass% or more, or 150 mass% or more, or 200 mass% or more, and the upper limit thereof is not particularly limited, and is normally 100 000 mass% or less, or 50 000 mass% or less, or 10 000 mass% or less.

[22] A method for enhancing storability of a composition comprising a dried edible plant, the method comprising: crushing an edible plant in which a content of $\gamma$-terpinene is 0.01 ppb or more, or 0.03 ppb or more, or 0.05 ppb or more, or 0.10 ppb or more, or 0.20 ppb or more, or 0.30 ppb or more, or 0.40 ppb or more, or 0.50 ppb or more, or 1.00 ppb or more, or 5.00 ppb or more, or 10.0 ppb or more, or 15.0 ppb or more, or 20.0 ppb or more, or 30.0 ppb or more, or 40.0 ppb or more, or 50.0 ppb or more, or 80.0 ppb or more, or 100 ppb or more, or 150 ppb or more, or 200 ppb or more, or 400 ppb or more, or 600 ppb or more, or 800 ppb or more, or 1 000 ppb or more, or 1 200 ppb or more, or 1 500 ppb or more, or 2 000 ppb or more, in terms of dry mass, and the upper limit thereof is 100 000 ppb or less, or 80 000 ppb or less, or 60 000 ppb or less, or 50 000 ppb or less, or 40 000 ppb or less, or 30 000 ppb or less, or 20 000 ppb or less, or 15 000 ppb or less, or 10 000 ppb or less, or 9 000 ppb or less; incorporating straight-chain fatty acids having 6 and/or 7 carbon atoms so that a total content thereof is 0.05 ppb or more, or 0.10 ppb or more, or 0.50 ppb or more, or 1.00 ppb or more, or 3.00 ppb or more, or 5.00 ppb or more, or 7.00 ppb or more, or 9.00 ppb or more, or 10.0 ppb or more, or 12.0 ppb or more, or 15.0 ppb or more, or 18.0 ppb or more, particularly 20.0 ppb or more, in terms of dry mass, and the upper limit thereof is 200 000 ppb or less, or 180 000 ppb or less, or 150 000 ppb or less, or 120 000 ppb or less, or 90 000 ppb or less, or 60 000 ppb or less, or 30 000 ppb or less; drying the edible plant at any stage until a water content on a dry basis is less than 30 mass%, or less than 25 mass%, or less than 20 mass%, or less than 15 mass%, or less than 10 mass%, and the lower limit thereof is not limited, and is normally 0.5 mass% or more, or 1.0 mass% or more, or 1.5 mass% or more, or 2.0 mass% or more; and performing adjustment so that a ratio of the total content of the straight-chain fatty acids having 6 and/or 7 carbon atoms to the content of $\gamma$-terpinene in the dried edible plant is 0.001 mass% or more, or 0.002 mass% or more, or 0.003 mass% or more, or 0.004 mass% or more, or 0.005 mass% or more, or 0.006 mass% or more, or 0.007 mass% or more, or 0.008 mass% or more, or 0.009 mass% or more, or 0.010 mass% or more, or 0.040 mass% or more, or 0.060 mass% or more, or 0.080 mass% or more, or 0.10 mass% or more, or 0.30 mass% or more, or 0.60 mass% or more, or 1.00 mass% or more, or 2.00 mass% or more, or 3.00 mass% or more, or 4.00 mass% or more, or 5.00 mass% or more, or 6.00 mass% or more, in terms of dry mass, and the upper limit thereof is not particularly limited, and is, for example, normally less than 10 000 mass%, or less than 8 000 mass%, or less than 6 000 mass%, or less than 5 500 mass%, or less than 4 500 mass%, or less than 4 000 mass%, or less than 3 500 mass%, or less than 3 000 mass%, or less than 2 500 mass%, or less than 2 000 mass%, or less than 1 500 mass%, or less than 1 000 mass%, or less than 900 mass%, or less than 800 mass%, or less than 700 mass%, or less than 600 mass%, or less than 500 mass%, or less than 400 mass%, or less than 300 mass%, or less than 200 mass%, or less than 180 mass%, or less than 170 mass%, or less than 160 mass%, or less than 150 mass%, or less than 140 mass%.

[23] A method for enhancing storability of a food/drink comprising a dried edible plant in which a water content on a dry basis is less than 30 mass%, or 20 mass% or less, or 10 mass% or less, and the lower limit thereof is not particularly limited, and is normally 0 mass% or more, or 0.5 mass% or more, the method comprising incorporating $\gamma$-terpinene so that a content thereof is 0.01 ppb or more, or 0.03 ppb or more, or 0.05 ppb or more, or 0.10 ppb or more, or 0.20 ppb or more, or 0.30 ppb or more, or 0.40 ppb or more, or 0.50 ppb or more, or 1.00 ppb or more, or 5.00 ppb or more, or 10.0 ppb or more, or 15.0 ppb or more, or 20.0 ppb or more, or 30.0 ppb or more, or 40.0 ppb or more, or 50.0 ppb or more, or 80.0 ppb or more, or 100 ppb or more, or 150 ppb or more, or 200 ppb or more, or 400 ppb or more, or 600 ppb or more, or 800 ppb or more, or 1 000 ppb or more, or 1 200 ppb or more, or 1 500 ppb or more, or 2 000 ppb or more, in terms of dry mass, and the upper limit thereof is 100 000 ppb or less, or 80 000 ppb or less, or 60 000 ppb or less, or 50 000 ppb or less, or 40 000 ppb or less, or 30 000 ppb or less, or 20 000 ppb or less, or 15 000 ppb or less, or 10 000 ppb or less, or 9 000 ppb or less; incorporating straight-chain fatty

acids having 6 and/or 7 carbon atoms so that a total content thereof is 0.05 ppb or more, or 0.10 ppb or more, or 0.50 ppb or more, or 1.00 ppb or more, or 3.00 ppb or more, or 5.00 ppb or more, or 7.00 ppb or more, or 9.00 ppb or more, or 10.0 ppb or more, or 12.0 ppb or more, or 15.0 ppb or more, or 18.0 ppb or more, particularly 20.0 ppb or more, and the upper limit thereof is 200 000 ppb or less, or 180 000 ppb or less, or 150 000 ppb or less, or 120 000 ppb or less, or 90 000 ppb or less, or 60 000 ppb or less, or 30 000 ppb or less; and performing adjustment so that a ratio of the total content of the straight-chain fatty acids having 6 and/or 7 carbon atoms to the content of $\gamma$-terpinene in the food/drink is 0.001 mass% or more, or 0.002 mass% or more, or 0.003 mass% or more, or 0.004 mass% or more, or 0.005 mass% or more, or 0.006 mass% or more, or 0.007 mass% or more, or 0.008 mass% or more, or 0.009 mass% or more, or 0.010 mass% or more, or 0.040 mass% or more, or 0.060 mass% or more, or 0.080 mass% or more, or 0.10 mass% or more, or 0.30 mass% or more, or 0.60 mass% or more, or 1.00 mass% or more, or 2.00 mass% or more, or 3.00 mass% or more, or 4.00 mass% or more, or 5.00 mass% or more, or 6.00 mass% or more, in terms of dry mass, and the upper limit thereof is not particularly limited, and is, for example, normally less than 10 000 mass%, or less than 8 000 mass%, or less than 6 000 mass%, or less than 5 500 mass%, or less than 4 500 mass%, or less than 4 000 mass%, or less than 3 500 mass%, or less than 3 000 mass%, or less than 2 500 mass%, or less than 2 000 mass%, or less than 1 500 mass%, or less than 1 000 mass%, or less than 900 mass%, or less than 800 mass%, or less than 700 mass%, or less than 600 mass%, or less than 500 mass%, or less than 400 mass%, or less than 300 mass%, or less than 200 mass%, or less than 180 mass%, or less than 170 mass%, or less than 160 mass%, or less than 150 mass%, or less than 140 mass%.

Advantageous Effect of the Invention

Thanks to the present invention, the hay-like odor of a dried edible plant containing $\gamma$-terpinene is suppressed by specific straight-chain fatty acids to provide a composition and a food/drink comprising a dried edible plant and having a well-balanced aroma and high storability.

Brief Description of the Drawing

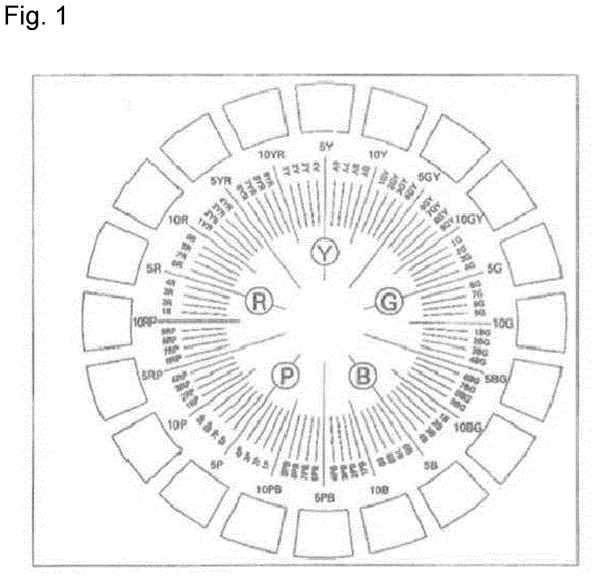

Figure 1 shows a Munsell hue circle in the Munsell color system.

Description of Embodiments

Hereinafter, the present invention will be described in detail on the basis of specific embodiments. However, the present invention is not bound by the following embodiments, and can be implemented in any mode without departing from the gist of the present invention.

In the present invention, where multiple upper limit values and/or multiple lower limit values are shown for the definition of any numerical value range, at least definitions of numerical value ranges in which a maximum value defined as an upper limit and a minimum value defined as a lower limit are combined are described in a direct manner even though the ranges are not explicitly shown, and all numerical value ranges obtained by combining any of the relevant upper limit values and any of the relevant lower limit values are intended to be encompassed by the present invention. For example, the phrases "the upper limit is normally less than 200 mass%, ...in particular, preferably less than 195 mass%, further preferably less than 190 mass%, especially preferably less than 185 mass%, or less than 180 mass%, or less than 175 mass%, or less than 170 mass%, or less than 165 mass%, or less than 160 mass%, or less than 155 mass%, particularly preferably 150 mass% or less" and "the lower limit is not particularly limited, and is normally 0 mass% or more, or 1 mass% or more, or 3 mass% or more, or 5 mass% or more", in the definition of the range of a heptanoic acid/caproic acid ratio described later, mean that that all of numerical value ranges obtained by arbitrarily combining the disclosed upper limits and lower limits, specifically all of 0 mass% or more and less than 200 mass%, 0 mass% or more and less than 195 mass%, 0 mass% or more and less than 190 mass%, 0 mass% or more and less than 185 mass%, 0 mass% or more and less than 180 mass%, 0 mass% or more and less than 175 mass%, 0 mass% or more and less than 170 mass%, 0 mass% or more and less than 165 mass%, 0 mass% or more and less than 160 mass%, 0 mass% or more and less than 155 mass%, 0 mass% or more and 150 mass% or less, 1 mass% or more and less than 200 mass%, 1 mass% or more and less than 195 mass%, 1 mass% or more and less than 190 mass%, 1 mass% or more and less than 185 mass%, 1 mass% or more and less than 180 mass%, 1 mass% or more and less than 175 mass%, 1 mass% or more and less than 170 mass%, 1 mass% or more and less than 165 mass%, 1 mass% or more and less than 160 mass%, 1 mass% or more and less than 155 mass%, 1 mass% or more and 150 mass% or less, 3 mass% or more and less than 200 mass%, 3 mass% or more and less than 195 mass%, 3 mass% or more and less than 190 mass%, 3 mass% or more and less than 185 mass%, 3 mass% or more and less than 180 mass%, 3 mass% or more and less than 175 mass%, 3 mass% or more and less than 170 mass%, 3 mass% or more and less than 165 mass%, 3 mass% or more and less than 160 mass%, 3 mass% or more and less than 155 mass%, 3 mass% or more and 150 mass% or less, 5 mass% or more and less than 200 mass%, 5 mass% or more and less than 195 mass%, 5 mass% or more and less than 190 mass%, 5 mass% or more and less than 185 mass%, 5 mass% or more and less than 180 mass%, 5 mass% or more and less than 175 mass%, 5 mass% or more and less than 170 mass%, 5 mass% or more and less than 165 mass%, 5 mass% or more and less than 160 mass%, 5 mass% or more and less than 155 mass%, and 5 mass% or more and 150 mass% or less are encompassed by the present invention.

[Composition containing dried edible plant]

One aspect of the present invention relates to a composition which contains a dried edible plant containing γ-terpinene, and also straight-chain fatty acids and in which the contents of these components satisfy requirements described hereafter (referred to as a "composition containing a dried edible plant according to the present invention", or a "composition of the present invention", or simply as a "composition"). The proportion of the dried edible plant in the "composition containing a dried edible plant" in the present invention is not particularly limited, and for example, the ratio of the dried edible plant to the whole composition may be in the range of 10 mass% or more and 100 mass% or less. More specifically, the lower limit thereof is preferably 10 mass% or more, more preferably 20 mass% or more, more preferably 30 mass% or more, more preferably 40 mass% or more, more preferably 50 mass% or more, more preferably 60 mass% or more, more preferably 70 mass% or more, more preferably 80 mass% or more, particularly preferably 90 mass% or more. The upper limit is 100 mass% (that is, the composition is composed only of a dried edible plant), or 100 mass% or less.

[Straight-chain fatty acids having 6 and/or 7 carbon atoms]

The total content of straight-chain fatty acids having 6 and/or 7 carbon atoms (referred to as a "straight-chain fatty acid content" or a "fatty acid content" as appropriate) in the composition containing a dried edible plant according to the present invention is in a predetermined range in the final composition. This leads to exhibition of an effect of improving the hay-like odor of a composition containing γ-terpinene. In the present invention, the term "hay-like odor" means a warm herb-like degradation odor generated by alteration of γ-terpinene in a drying step. Specifically, the fatty acid content in the final composition in terms of dry mass is, for example, preferably in the range of 0.05 ppb or more and 200 000 ppb or less. More specifically, the lower limit is normally 0.05 ppb or more. The lower limit is, in particular, preferably 0.10 ppb or more, further preferably 0.50 ppb or more, especially preferably 1.00 ppb or more, or 3.00 ppb or more, or 5.00 ppb or more, or 7.00 ppb or more, or 9.00 ppb or more, or 10.0 ppb or more, or 12.0 ppb or more, or 15.0 ppb or more, or 18.0 ppb or more, or 20.0 ppb or more, or 50.0 ppb or more, or 90.0 ppb or more, or 200 ppb or more, or 500 ppb or more. On the other hand, if the fatty acid content is excessively high, the aroma of the component may become too strong, leading to impairment of the aroma balance. Therefore, the upper limit thereof is normally 200 000 ppb or less, preferably, in particular, 180 000 ppb or less, further preferably 150 000 ppb or less, particularly preferably 120 000 ppb or less, or 90 000 ppb or less, or 60 000 ppb or less, or 30 000 ppb or less, or 10 000 ppb or less.

Further, it is preferable that one of the contents of a straight-chain fatty acid having 6 carbon atoms and a straight-chain fatty acid having 7 carbon atoms be a predetermined content described above, and it is preferable that both the contents of a straight-chain fatty acid having 6 carbon atoms and a straight-chain fatty acid having 7 carbon atoms be, respectively, predetermined contents described above. The relevant fatty acid may be a saturated fatty acid or an unsaturated fatty acid, and is preferably a saturated fatty acid (that is, hexanoic acid (caproic acid) and heptanoic acid (enanthic acid)).

[Straight-chain fatty acid having 6 carbon atoms]

While the total content of straight-chain fatty acids having 6 and/or 7 carbon atoms in the composition containing a dried edible plant according to the present invention may be the above-described specific amount in the final composition, it is preferable that the composition contain a predetermined amount of a straight-chain fatty acid having 6 carbon atoms (sometimes referred to as CAS Registry Number: 142-62-1, which is also known as hexanoic acid or caproic acid, or C=6). This leads to more significant exhibition of a preferred effect of improving the hay-like odor of a composition containing a dried edible plant containing γ-terpinene. Specifically, the lower limit of the content of caproic acid in the final composition is, normally, preferably 0.02 ppb or more in terms of dry mass. The lower limit of the content of caproic acid is, in particular, 0.03 ppb or more, further preferably 0.05 ppb or more, especially preferably 0.10 ppb or more, or 0.50 ppb or more, or 1.00 ppb or more, or 5.00 ppb or more, or 10.0 ppb or more, or 20.0 ppb or more, or 50.0 ppb or more, or 80.0 ppb or more, or 110 ppb or more, or 150 ppb or more, or 200 ppb or more, or 250 ppb or more, or 300 ppb or more, or 350 ppb or more, or 400 ppb or more, or 600 ppb or more, particularly preferably 800 ppb or more. On the other hand, when the content of caproic acid is excessively high, the aroma of the component is too strong, and therefore the upper limit is normally 150 000 ppb or less, in particular, preferably 130 000 ppb or less, further preferably 100 000 ppb or less, especially preferably 90 000 ppb or less, or 80 000 ppb or less, or 70 000 ppb or less, or 60000 ppb or less, or 50 000 ppb or less, or 40 000 ppb or less, or 30 000 ppb or less, or 20 000 ppb or less, or 10 000 ppb or less, or 8 000 ppb or less, or 6 000 ppb or less, or 4 000 ppb or less, or 2 000 ppb or less, particularly preferably 1 000 ppb or less.

[Straight-chain fatty acid having 7 carbon atoms]

While the total content of straight-chain fatty acids having 6 and/or 7 carbon atoms in the composition containing a dried edible plant according to the present invention may be the above-described specific amount in the final composition, it is preferable that the composition contain a predetermined amount of a straight-chain fatty acid having 7 carbon atoms (sometimes referred to as CAS Registry Number: 111-14-8, which is also known as heptanoic acid or enanthic acid, or C=7). This leads to exhibition of a preferred effect of more significantly improving the hay-like odor of a composition containing $\gamma$-terpinene. Specifically, the lower limit of the content of heptanoic acid in the final composition is, normally, preferably 0.01 ppb or more in terms of dry mass. The lower limit of the content of heptanoic acid is, in particular, preferably 0.03 ppb or more, further preferably 0.05 ppb or more, especially preferably 0.10 ppb or more, or 0.50 ppb or more, or 1.00 ppb or more, or 5.00 ppb or more, or 10.0 ppb or more, or 20.0 ppb or more, or 50.0 ppb or more, or 80.0 ppb or more, or 110 ppb or more, or 150 ppb or more, or 200 ppb or more, or 250 ppb or more, or 300 ppb or more, or 350 ppb or more, or 400 ppb or more, or 600 ppb or more, particularly preferably 800 ppb or more. On the other hand, when the content of heptanoic acid is excessively high, the aroma of the component is too strong, and therefore the upper limit is normally 100 000 ppb or less, and in particular, preferably 80 000 ppb or less, further preferably 60 000 ppb or less, especially preferably 40 000 ppb or less, or 20 000 ppb or less, or 10 500 ppb or less, or 8 000 ppb or less, or 6 000 ppb or less, or 5 000 ppb or less, or 4 000 ppb, or 3 000 ppb or less, particularly preferably 2 000 ppb or less.

[Ratio of content of straight-chain fatty acid having 7 carbon atoms to content of straight-chain fatty acid having 6 carbon atoms]

While the total content of straight-chain fatty acids having 6 and/or 7 carbon atoms in the composition comprising a dried edible plant according to the present invention may be the specific amount in the final composition, it is preferable to incorporate the components so that the ratio of the content of a straight-chain fatty acid having 7 carbon atoms to the content of a straight-chain fatty acid having 6 carbon atoms (referred to a "heptanoic acid/caproic acid ratio" or a "C7/C6 ratio" as appropriate) is smaller than a predetermined ratio because a composition having little pungent odor specific to a fatty acid and a well-balanced aroma is obtained. Specifically, the C7/C6 ratio in the final composition is, for example, preferably in the range of 0 mass% or more and less than 200 mass% in terms of dry mass. More specifically, the upper limit thereof is normally, preferably less than 200 mass%. The upper limit of the ratio is, in particular, preferably less than 195 mass%, further preferably less than 190 mass%, especially preferably less than 185 mass%, or less than 180 mass%, or less than 175 mass%, or less than 170 mass%, or less than 165 mass%, or less than 160 mass%, or less than 155 mass%, particularly preferably 150 mass% or less. On the other hand, the lower limit is not particularly limited, and is normally 0 mass% or more, or preferably 1 mass% or more, or 3 mass% or more, or 5 mass% or more.

[$\gamma$-Terpinene]

In the composition comprising a dried edible plant according to the present invention, it is beneficial that the content of $\gamma$-terpinene (CAS Registry Number: 99-85-4, gamma-terpinene) in the final composition is a specific amount because a hay-like odor suppressing effect is exhibited. Specifically, the content of $\gamma$-terpinene in the final composition is, for example, preferably in the range of 0.01 ppb or more and 100 000 ppb or less in terms of dry mass. More specifically, the lower limit thereof is normally 0.01 ppb or more. The present invention is more beneficial when the lower limit of the content of $\gamma$-terpinene in the composition is, in particular, preferably 0.03 ppb or more, further preferably 0.05 ppb or more, especially preferably 0.10 ppb or more, or 0.20 ppb or more, or 0.30 ppb or more, or 0.40 ppb or more, or 0.50 ppb or more, or 1.00 ppb or more, or 5.00 ppb or more, or 10.0 ppb or more, or 15.0 ppb or more, or 20.0 ppb or more, or 30.0 ppb or more, or 40.0 ppb or more, or 50.0 ppb or more, or 80.0 ppb or more, or 100 ppb or more, or 150 ppb or more, or 200 ppb or more, or 400 ppb or more, or 600 ppb or more, or 800 ppb or more, or 1 000 ppb or more, or 1 200 ppb or more, or 1 500 ppb or more, particularly preferably 2 000 ppb or more. On the other hand, the upper limit thereof is normally 100 000 ppb or less, and in particular, preferably 80 000 ppb or less, further preferably 60 000 ppb or less, especially preferably 50 000 ppb or less, or 40 000 ppb or less, or 40 000 ppb or less, or 30 000 ppb or less, or 20 000 ppb or less, or 15 000 ppb or less, or 10 000 ppb or less, particularly preferably 9 000 ppb or less.

[Ratio of total content of straight-chain fatty acids having 6 and/or 7 carbon atoms to content of $\gamma$-terpinene]

When the ratio of the total content of straight-chain fatty acids having 6 and/or 7 carbon atoms to the content of $\gamma$-terpinene (referred to as a "fatty acid/y-terpinene ratio" as appropriate) in the composition containing a dried edible plant according to the present invention is excessively low in the final composition, the effect of the present invention is not exhibited. Therefore, the composition may contain these components in a predetermined ratio or higher. Specifically, the fatty acid/y-terpinene ratio in the final composition is, for example, preferably in the range of 0.001 mass% or more and less than 10 000 mass% in terms of dry mass. More specifically, the lower limit thereof is normally 0.001 mass% or more. The ratio is, in particular, preferably 0.002 mass% or more, further preferably 0.003 mass% or more, especially preferably 0.004 mass% or more, or 0.005 mass% or more, or 0.006 mass% or more, or 0.007 mass% or more, or 0.008 mass% or more, or 0.009 mass% or more, or 0.010 mass% or more, or 0.040 mass% or more, or 0.060 mass% or more, or 0.080 mass% or more, or 0.10 mass% or more, or 0.30 mass% or more, or 0.60 mass% or more, or 1.00 mass% or more, or 2.00 mass% or more, or 3.00 mass% or more, or 4.00 mass% or more, or 5.00 mass% or more, particularly preferably 6.00 mass% or more. On the other hand, the upper limit is not particularly limited, and is, for example, normally less than 10 000 mass%, and in particular, preferably less than 8 000 mass%, further preferably less than 6 000 mass%, especially preferably less than 5 500 mass%, or less than 4 500 mass%, or less than 4 000 mass%, or less than 3 500 mass%, or less than 3 000 mass%, or less than 2 500 mass%, or less than 2 000 mass%, or less than 1 500 mass%, or less than 1 000 mass%, or less than 900 mass%, or less than 800 mass%, or less than 700 mass%, or less than 600 mass%, or less than 500 mass%, or less than 400 mass%, or less than 300 mass%, or less than 200 mass%, or less than 180 mass%, or less than 170 mass%, or less than 160 mass%, or less than 150 mass%, particularly preferably less than 140 mass%. It is preferable to perform the drying treatment so that the ratio is increased by the drying treatment (that is, the value thereof increases after the drying treatment). It is preferable that one of the ratios of a straight-chain fatty acid having 6 carbon atoms and a straight-chain fatty acid having 7 carbon atoms be a predetermined ratio described above, and it is preferable that both the ratios of a straight-chain fatty acid having 6 carbon atoms and a straight-chain fatty acid having 7 carbon atoms be, respectively, predetermined ratios described above. The relevant fatty acid may be a saturated fatty acid or an unsaturated fatty acid, and is preferably a saturated fatty acid (that is, caproic acid or hexanoic acid).

[Ratio of content of straight-chain fatty acid having 6 carbon atoms to content of $\gamma$-terpinene]

While the composition containing a dried edible plant according to the present invention may contain a straight-chain fatty acid having 6 carbon atoms so that the final composition has a certain fatty acid/y-terpinene ratio, the effect of the present invention is not exhibited particularly if the ratio of the content of a straight-chain fatty acid having 6 carbon atoms to the content of $\gamma$-terpinene (referred to as a "caproic acid/y-terpinene ratio as appropriate) is excessively low. Therefore, it is preferable that the composition contain the component in a predetermined ratio or higher. Specifically, the lower limit of the caproic acid/y-terpinene ratio in the final composition is, normally, preferably 0.0005 mass% or more in terms of dry mass. The lower limit of the caproic acid/y-terpinene ratio is, in particular, preferably 0.0008 mass% or more, further preferably 0.0010 mass% or more, especially preferably 0.0030 mass% or more, or 0.0050 mass% or more, or 0.0070 mass% or more, or 0.010 mass% or more, or 0.040 mass% or more, or 0.070 mass% or more, or 0.10 mass% or more, or 0.30 mass% or more, or 0.60 mass% or more, or 1.0 mass% or more, or 5.0 mass% or more, or 10.0 mass% or more, or 15.0 mass% or more, or 20.0 mass% or more, particularly preferably 30.0 mass% or more. On the other hand, the upper limit is not particularly limited, and is, for example, normally less than 5 000 mass%, and in particular, preferably less than 4 000 mass%, further preferably less than 3 000 mass%, especially preferably less than 1 000 mass%, or less than 900 mass%, or less than 800 mass%, or less than 700 mass%, or less than 600 mass%, or less than 500 mass%, or less than 400 mass%, or less than 300 mass%, or less than 200 mass%, particularly preferably less than 100 mass%. It is preferable to perform the drying treatment so that the ratio is increased (that is, the value thereof increases after the drying treatment).

[Ratio of content of straight-chain fatty acid having 7 carbon atoms to content of $\gamma$-terpinene]

While the composition comprising a dried edible plant according to the present invention may contain a straight-chain fatty acid having 7 carbon atoms so that the final composition has a certain fatty acid/y-terpinene ratio, the effect of the present invention is not exhibited particularly if the ratio of the content of a straight-chain fatty acid having 7 carbon atoms to the content of $\gamma$-terpinene (referred to as a "heptanoic acid/y-terpinene ratio" as appropriate) is excessively low. Therefore, it is preferable that the composition contain the component in a predetermined ratio or higher. Specifically, the lower limit of the heptanoic acid/y-terpinene ratio in the final composition is, normally, preferably 0.0001 mass% or more in terms of dry mass. The lower limit of the heptanoic acid/y-terpinene ratio is, in particular, preferably 0.0002 mass% or more, further preferably 0.0005 mass% or more, especially preferably 0.0008 mass% or more, or 0.0010 mass% or more, or 0.0030 mass% or more, or 0.0050 mass% or more, or 0.0070 mass% or more, or 0.010 mass% or more, or 0.040 mass% or more, or 0.070 mass% or more, or 0.10 mass% or more, or 0.30 mass% or more, or 0.60 mass% or more, or 1.0 mass% or more, or 5.0 mass% or more, or 10.0 mass% or more, or 15.0 mass% or more, or 20.0 mass% or more, particularly preferably 30.0 mass% or more. On the other hand, the upper limit is not particularly limited, and is, for example, normally less than 5 000 mass%, and in particular, preferably less than 4 000 mass%, further preferably less than 3 000 mass%, especially preferably less than 1 000 mass%, or less than 900 mass%, or less than 800 mass%, or less than 700 mass%, or less than 600 mass%, or less than 500 mass%, or less than 400 mass%, or less than 300 mass%, or less than 200 mass%, particularly preferably less than 100 mass%.

Further, it is more preferable that both the caproic acid/y-terpinene ratio and the heptanoic acid/y-terpinene ratio be, respectively, predetermined ratios. It is preferable that the peak area ratio of the components be adjusted to a certain ratio using, for example, solid phase micro extraction-gas chromatography mass spectrometry described later. It is preferable to perform the drying treatment so that the ratio may be increased (that is, the value thereof increases after the drying treatment).

[Crushing treatment]

When a γ-terpinene-containing edible plant is subjected to crushing treatment at any stage in addition to drying treatment, the problem to be solved by the present invention arises more significantly, and therefore the composition containing a dried edible plant according to the present invention is preferably a crushed product (dried and crushed edible plant or crushed composition), more preferably dried and crushed product (dried and crushed composition). More specifically, a dried edible plant or a composition containing the dried edible plant according to the present invention may have a powdery shape or a chip shape. In production of a dried and crushed edible plant or a crushed composition containing the dried and crushed edible plant, an edible plant or a composition containing the edible plant may be crushed to perform preparation, and by using a crushed edible plant as a raw material, the preparation can be performed without crushing the composition itself. In the present invention, crushing treatment can be performed at any stage, and may be performed before, during and/or after drying treatment. More preferably, the crushing treatment is performed at least after the drying treatment. As a crushing method, any method generally used for crushing foods can be used. Examples of the apparatus for such crushing include apparatuses, such as a blender, a mixer, a mill, a kneader, a grinder, a crusher, and an attritor, and any of these apparatuses may be used. As such an apparatus, for example, a medium stirring mill, such as a dry bead mill and a ball mill (a rolling type, a vibration type, and the like), a jet mill, a high-speed rotary impact type mill (e.g., pin mill), a roll mill, or a hammer mill can be used. The temperature at the time of crushing is also not limited, and any of high-temperature crushing, ordinary-temperature crushing, and low-temperature crushing may be performed. The pressure at the time of crushing is also not limited, and any of high-pressure crushing, ordinary-pressure crushing, and low-pressure crushing may be performed. The crushing may be wet crushing in which a composition that is not in a dry state is crushed, or dry crushing in which a composition in a dry state is crushed. Dry crushing is preferable, and it is particularly preferable to perform dry crushing without passing through a wet crushing step. In particular, when a powdery composition is produced, crushing is preferably dry crushing, and it is particularly preferable to perform dry crushing without passing through a wet crushing step. Although the principle thereof is unknown, it is considered that for the composition to be formed into fine particle complexes described later, it is preferable to perform dry crushing in which contact between particles containing a watersoluble component such as a saccharide occurs, and by selecting dry crushing, the particles form the fine particle complexes described later, so that the specific surface area decreases, leading to suppression of generation of the hay-like odor. Therefore, the composition of the present invention is more preferably a composition in a dry-crushed state (more preferably in a state of being dry-crushed without passing through a wet crushing step), more preferably a powdery composition in a dry-crushed state (more preferably in a state of being dry-crushed without passing through a wet crushing step).

In the present invention, it is preferable to blanch an edible plant at any stage because enzymes in the edible plant can be modified to obtain a composition in which a hay-like odor precursor is not generated. The blanching treatment can be performed before, during or after crushing, and in particular, it is more preferable to perform the blanching treatment with stirring (at an final temperature of 85°C) after crushing into a chip shape because dripping can be suppressed. Further, it is more preferable that edible plant chips obtained by performing the blanching treatment with stirring (at an final temperature of 85°C) after crushing into a chip shape be subjected to drying treatment (more preferably low-pressure and low-temperature drying described later) to obtain a dried chip-shaped composition. It is particularly preferable that edible plant chips obtained by performing the blanching treatment with stirring (at an final temperature of 85°C) after crushing into a chip shape be further subjected to drying treatment (more preferably low-pressure and low-temperature drying described later), and then to crushing (more preferably dry crushing described above) to obtain a dried powdery composition. In the present invention, the edible plant can be frozen at any stage, and it is preferable to perform the freezing treatment before crushing treatment, and subject the drippings and the frozen composition to the crushing treatment in combination because a fragrant composition is obtained.

[Drying treatment]

In production of a dried edible plant, dried and crushed edible plant, a dried composition or dried and crushed composition, an edible plant or a composition may be dried to perform preparation, and by using a dried edible plant as a raw material, the preparation can be performed without drying the composition itself. As the drying method, any method that is generally used in drying of foods can be used. Examples thereof include sun drying, shade drying, freeze-drying, air drying (e.g., hot air drying, fluidized bed drying method, spray drying, drum drying, and low temperature drying), pressure drying, vacuum drying, microwave drying, and oil heat drying. In particular, a method involving air drying (e.g., hot air drying, fluidized bed drying method, spray drying, drum drying, or low temperature drying) or freeze-drying is preferable in view of a small degree of change in color tone or flavor inherent in the plant and relative ease of suppressing the non-food aroma (e.g., burnt odor). The pressure at the time of drying is also not limited, and any of high-pressure drying, ordinary-pressure drying, and low-pressure drying (the pressure during drying is preferably 90% or less, or 80% or less, or 70% or less of atmospheric pressure; and the lower limit is not particularly limited, and is 0% (that is, in a vacuum state or substantially in a vacuum state), or 0% or more) may be performed. It is preferable to employ low-pressure drying or drum drying, and it is particularly preferable to employ low-pressure drying or drum drying for foodstuffs containing available carbohydrates at 10 mass% or more in terms of dry mass (in particular, umbellifers, more preferably carrot, celery, parsley, cicely and coriander). The temperature at the time of drying is also not limited, and any of high-temperature drying, ordinary-temperature drying, and low-temperature drying (the drying temperature is preferably 95°C or lower, or 90°C or lower, or 80°C or lower, or 70°C or lower; and the lower limit is not particularly limited, and is 0°C or higher, or 10°C or higher, or 20°C or higher, or 30°C or higher) may be performed, and it is preferable to employ low-temperature drying. In particular, low-temperature drying under the low-pressure condition (the pressure and the temperature may be appropriately set, and are preferably set so that the boiling point of water is 95°C or lower, or 90°C or lower, or 80°C or lower, or 70°C or lower; and the lower limit is not particularly limited, and is 0°C or higher, or 10°C or higher, or 20°C or higher, or 30°C or higher) is more preferable. Although the principle thereof is unknown, it is considered that when exposed under a high-temperature condition during drying, the composition is apt to generate the hay-like odor with a hay-like odor precursor accumulated by a reaction of an enzyme present in the plant. Specifically, it is preferable to employ a method involving vacuum drum drying or vacuum microwave drying which causes little thermal loading.

The "dry" state in the present invention means that for example, the water content on a dry basis is in the range of 0 mass% or more and less than 30 mass%. More specifically, the dry state refers to a state in which the upper limit of the water content on a dry basis is less than 30 mass%, more preferably a state in which the water content on a dry basis is 20 mass% or less, more preferably a state in which the water content on a dry basis is 10 mass% or less. The lower limit is not particularly limited, and is normally 0 mass% or more, or 0.5 mass% or more.

Further, the dried edible plant in the present invention is an edible plant subjected to drying treatment, and the dried and crushed edible plant is an edible plant subjected to drying treatment and crushing treatment. The crushed composition in the present invention is a composition in which a raw material and/or the composition itself are subjected to crushing treatment, and the dried and crushed composition is a composition in which a raw material and/or the composition itself are subjected to drying treatment and crushing treatment.

[Water content on dry basis (water content)]

The water content on a dry basis of the composition containing a dried edible plant according to the present invention may be in a predetermined range in the final composition. Specifically, the water content on a dry basis of the composition containing a dried edible plant according to the present invention in the final composition is, for example, preferably in the range of 0.5 mass% or more and less than 30 mass%. More specifically, the upper limit thereof is normally less than 30 mass%. The upper limit of the water content on a dry basis may be, in particular, less than 25 mass%, or less than 20 mass%, particularly less than 15 mass%, or less than 10 mass%. On the other hand, the lower limit of the water content on a dry basis in the composition containing a dried edible plant according to the present invention is not limited, and may be normally 0.5 mass% or more, and may be, in particular, 1.0 mass% or more, or 1.5 mass% or more, or 2.0 mass% or more, from the viewpoint of industrial production efficiency. The water content on a dry basis in the composition containing a dried edible plant according to the present invention may be derived from various components of the composition, or may be derived from additionally added water. It is preferable that the dried edible plant have the same water content on a dry basis.

In the present invention, the "water content on a dry basis" means a ratio of the amount of moisture in the composition (the total amount of moisture derived from a composition raw material containing a dried edible plant and separately added moisture) to the solid content in the composition of the present invention. The numerical value thereof is measured by heating a sample to 90°C by a method of drying by heating under reduced pressure in accordance with the Standard Tables of Food Composition in Japan, 2015, (Seventh Revised Version). Specifically, an appropriate amount of a sample is collected in a scale container adjusted to constant weight (W0). The scale container is weighed (W1), and put in an electric vacuum constant-temperature dryer adjusted to a predetermined temperature (specifically, 90°C) at normal pressure, where the container is uncapped or opened. The door is closed, a vacuum pump is actuated to perform drying at a predetermined degree of evacuation for a definite period of time, the vacuum pump is stopped, dry air is fed to bring the atmosphere back to normal pressure, and the scale container is taken out, capped, and allowed to cool in a desiccator, followed by measurement of the mass. The drying, cooling, and weighing the mass are repeated until a constant weight (W2) is reached. The water content on a dry basis (mass%) is determined from the following calculation equation.

```
Water content on a dry basis (mass%) = (W1 - W2)/(W2

- W0) × 100
```

W0: mass (g) of the scale container adjusted to constant weight,
W1: mass (g) of the scale container containing a sample before drying, and
W2: mass (g) of the scale container containing the sample after drying.

Here, in the present invention, the term "dry mass" indicates a residue mass obtained by subtracting a moisture content calculated from the above-described "water content on a dry basis" from the total mass of the composition or the like, and the term "in terms of dry mass" or "dry amount-based" indicates a content ratio of each component which is calculated from the dry mass of the composition as a denominator and the content of each component as a numerator. Unless otherwise specified, the ratio is expressed in terms of dry mass.

[β-Ionone]

It is preferable that the composition containing a dried edible plant according to the present invention contain a specific amount of β-ionone (CAS Registry Number: 14901-07-6, beta-Ionone) in the final composition. Specifically, the content of β-ionone in the final composition in terms of dry mass is, for example, preferably in the range of 0.01 ppb or more and 50 000 ppb or less. More specifically, the lower limit thereof is normally, preferably 0.01 ppb or more. The lower limit of the content of β-ionone is, in particular, preferably 0.05 ppb or more, further preferably 0.10 ppb or more, especially preferably 0.50 ppb or more, or 1.0 ppb or more. On the other hand, if the content of β-ionone is excessively high, the aroma thereof is too strong. Therefore, the upper limit thereof is normally 50 000 ppb or less, and in particular, preferably 30 000 ppb or less, or 20 000 ppb or less, or 10 000 ppb or less, or 5 000 ppb or less, particularly preferably 1 000 ppb or less.

[Ratio of content of β-ionone to content of γ-terpinene]

It is preferable that the composition containing a dried edible plant according to the present invention contain β-ionone so that the ratio of the content of β-ionone to the content of γ-terpinene (referred to as a "β-ionone/-γ-terpinene ratio" as appropriate) is a predetermined ratio or higher in the final composition because the hay-like odor suppressing effect which is the problem in the present invention is maintained for a long period of time (e.g., 1 month or more) even if the composition is stored at ordinary temperature (20°C). Specifically, the β-ionone/γ-terpinene ratio in the final composition is, for example, preferably in the range of 0.001 mass% or more and less than 12 000 mass% in terms of dry mass. More specifically, the lower limit is, normally, preferably 0.001 mass% or more. The lower limit of the ratio is, in particular, preferably 0.002 mass% or more, or 0.003 mass% or more, or 0.004 mass% or more, or 0.005 mass% or more, or 0.006 mass% or more, or 0.007 mass% or more, or 0.008 mass% or more, or 0.009 mass% or more, or 0.010 mass% or more. On the other hand, the upper limit is not particularly limited, and is, for example, normally less than 12 000 mass%, and in particular, preferably less than 10 000 mass%, further preferably less than 8 000 mass%, especially preferably less than 6 000 mass%, or less than 3 000 mass%, or less than 1 000 mass%, or less than 900 mass%, or less than 800 mass%, or less than 700 mass%, or less than 600 mass%, or less than 550 mass%, or less than 500 mass%, or less than 400 mass%, or less than 300 mass%, or less than 200 mass%, or less than 100 mass%, or less than 30 mass%, or less than 10 mass%, or less than 5 mass%. It is preferable to perform the drying treatment so that the ratio is increased (that is, the value thereof increases after the drying treatment).

[Ratio of content of β-ionone to total content of straight-chain fatty acids having 6 and/or 7 carbon atoms]

It is preferable to incorporate β-ionone in the composition containing a dried edible plant according to the present invention so that the ratio of the content of β-ionone to the total content of straight-chain fatty acids having 6 and/or 7 carbon atoms (referred to as a "β-ionone/fatty acid ratio" as appropriate) is a predetermined ratio or higher in the final composition because the hay-like odor during storage is easily suppressed. Specifically, the lower limit of the β-ionone/fatty acid ratio in the final composition is, normally, preferably 0.001 mass% or more in terms of dry mass. The lower limit of the ratio is, in particular, preferably 0.002 mass% or more, or 0.003 mass% or more, or 0.004 mass% or more, or 0.005 mass% or more, or 0.007 mass% or more, or 0.010 mass% or more, or 0.040 mass% or more, or 0.070 mass% or more, or 0.10 mass% or more, or 0.30 mass% or more, or 0.60 mass% or more, or 1.0 mass% or more, or 5.0 mass% or more, or 10.0 mass% or more, or 15.0 mass% or more, or 20.0 mass% or more, particularly preferably 30.0 mass% or more. On the other hand, the upper limit is not particularly limited, and is, for example, normally less than 12 000 mass%, and in particular, preferably less than 10 000 mass%, further preferably less than 8 000 mass%, especially preferably less than 6 000 mass%, or less than 3 000 mass%, or less than 1 000 mass%, or less than 900 mass%, or less than 800 mass%, or less than 700 mass%, or less than 600 mass%, or less than 500 mass%, or less than 400 mass%, or less than 300 mass%, or less than 200 mass%, particularly preferably less than 100 mass%. It is preferable to perform the drying treatment so that the ratio is increased (that is, the value thereof increases after the drying treatment). Further, it is preferable that one of the contents of a straight-chain fatty acid having 6 carbon atoms or a straight-chain fatty acid having 7 carbon atoms be a predetermined content described above, and it is preferable that both the contents of a straight-chain fatty acid having 6 carbon atoms and a straight-chain fatty acid having 7 carbon atoms be, respectively, predetermined contents described above. The relevant fatty acid may be a saturated fatty acid or an unsaturated fatty acid, and is preferably a saturated fatty acid (that is, caproic acid or hexanoic acid).

[Ratio of content of β-ionone to content of straight-chain fatty acid having 6 carbon atoms]

It is preferable to incorporate β-ionone in the composition containing a dried edible plant according to the present invention so that the ratio of the content of β-ionone to the content of a straight-chain fatty acid having 6 carbon atoms (referred to as a "β-ionone/caproic acid ratio" as appropriate) is a predetermined ratio or higher in the final composition because the hay-like odor during storage is easily suppressed. Specifically, the lower limit of the β-ionone/caproic acid ratio in the final composition is, normally, preferably 0.001 mass% or more in terms of dry mass. The lower limit of the ratio is, in particular, preferably 0.002 mass% or more, or 0.003 mass% or more, or 0.004 mass% or more, or 0.005 mass% or more, or 0.007 mass% or more, or 0.010 mass% or more, or 0.040 mass% or more, or 0.070 mass% or more, or 0.10 mass% or more, or 0.30 mass% or more, or 0.60 mass% or more, or 1.0 mass% or more, or 5.0 mass% or more, or 10.0 mass% or more, or 15.0 mass% or more, or 20.0 mass% or more, particularly preferably 30.0 mass% or more. On the other hand, the upper limit is not particularly limited, and is, for example, normally less than 20 000 mass%, and in particular, preferably less than 15 000 mass%, further preferably less than 10 000 mass%, especially preferably less than 8 000 mass%, or less than 6 000 mass%, or less than 3 000 mass%, or less than 1 000 mass%, or less than 900 mass%, or less than 800 mass%, or less than 700 mass%, or less than 600 mass%, or less than 500 mass%, or less than 400 mass%, or less than 300 mass%, or less than 200 mass%, particularly preferably less than 100 mass%. It is preferable to perform the drying treatment so that the ratio is increased (that is, the value thereof increases after the drying treatment).

[Ratio of content of β-ionone to content of straight-chain fatty acid having 7 carbon atoms]

It is preferable to incorporate β-ionone in the composition containing a dried edible plant according to the present invention so that the ratio of the content of β-ionone to the content of a straight-chain fatty acid having 7 carbon atoms (referred to as a "β-ionone/heptanoic acid ratio" as appropriate) is a predetermined ratio or higher in the final composition because the hay-like odor during storage is easily suppressed. Specifically, the lower limit of the β-ionone/heptanoic acid ratio in the final composition is, normally, preferably 0.001 mass% or more in terms of dry mass. The lower limit of the ratio is, in particular, preferably 0.002 mass% or more, or 0.003 mass% or more, or 0.004 mass% or more, or 0.005 mass% or more, or 0.007 mass% or more, or 0.010 mass% or more, or 0.040 mass% or more, or 0.070 mass% or more, or 0.10 mass% or more, or 0.30 mass% or more, or 0.60 mass% or more, or 1.0 mass% or more, or 5.0 mass% or more, or 10.0 mass% or more, or 15.0 mass% or more, or 20.0 mass% or more, particularly preferably 30.0 mass% or more. On the other hand, the upper limit is not particularly limited, and is, for example, normally less than 100 000 mass%, and in particular, preferably less than 80 000 mass%, further preferably less than 60 000 mass%, especially preferably less than 40 000 mass%, or less than 20 000 mass%, or less than 9 000 mass%, or less than 8 000 mass%, or less than 7 000 mass%, or less than 6 000 mass%, particularly preferably less than 5 000 mass%. It is preferable to perform the drying treatment so that the ratio is increased (that is, the value increases after the drying treatment).

It is more preferable that both the β-ionone/caproic acid ratio and the β-ionone/heptanoic acid ratio be, respectively, predetermined ratios because generation of the hay-like odor during storage is more easily suppressed. It is preferable that the peak area ratio of the components be adjusted to a certain ratio using, for example, solid phase micro extraction-gas chromatography mass spectrometry described later.

[β-Caryophyllene]

It is preferable that the composition containing a dried edible plant according to the present invention contain a specific amount of β-caryophyllene (CAS Registry Number: 87-44-5, β-caryophyllene, sometimes referred to simply as caryophyllene) in the final composition. This imparts a ripe flavor specific to β-caryophyllene, so that the composition has a more favorable taste. Specifically, the lower limit of the content of β-caryophyllene in the final composition is, normally, preferably 0.01 ppb or more in terms of dry mass. The present invention is more beneficial when the lower limit of the content of β-caryophyllene in the composition is, in particular, preferably 1.0 ppb or more, further preferably 3.0 ppb or more, especially preferably 5.0 ppb or more, or 8.0 ppb or more, or 11.0 ppb or more, or 15.0 ppb or more, or 20.0 ppb or more, or 30.0 ppb or more, or 40.0 ppb or more, or 50.0 ppb or more, or 80.0 ppb or more, or 100 ppb or more, or 150 ppb or more, or 200 ppb or more, or 400 ppb or more, or 600 ppb or more, or 800 ppb or more, or 1 000 ppb or more, or 1 200 ppb or more, or 1 500 ppb or more, particularly preferably 2 000 ppb or more. On the other hand, the upper limit is normally 100 000 ppb or less, and in particular, preferably 80 000 ppb or less, further preferably 60 000 ppb or less, especially preferably 40 000 ppb or less, or 20 000 ppb or less, particularly preferably 9 000 ppb or less.

[Ratio of β-caryophyllene peak area value to total peak area value of straight-chain fatty acids having 6 and/or 7 carbon atoms]

It is preferable that the composition containing a dried edible plant according to the present invention contain β-caryophyllene so that the ratio of a β-caryophyllene peak area value to a total peak area value of straight-chain fatty acids having 6 and/or 7 carbon atoms (in particular, preferably their total peak area value (sometimes referred to as "C6 + C7"), that is, a total value of the total peak area of the straight-chain fatty acid having 6 carbon atoms and the total peak area of the straight-chain fatty acid having 7 carbon atoms when the composition contains both a straight-chain fatty acid having 6 carbon atoms and a straight-chain fatty acid having 7 carbon atoms) (this peak area value ratio is referred to as a "β-caryophyllene/fatty acid peak area value ratio" as appropriate), when measured by extracting a volatile component at a sample temperature of 80°C for 20 minutes using solid phase micro extraction-gas chromatography mass spectrometry described later, is above a predetermined ratio in the final composition. This imparts a ripe flavor to the composition, so that the composition has a more favorable taste. Here, the peak area value is a numerical value reflecting the volatility of a component, and the numerical value is totally different from a concentration ratio of the component, and defines the scent releasing property of each component. Specifically, it can be considered that β-caryophyllene which has relatively high volatility improves the scent releasing property of intrinsically low-volatile straight-chain fatty acids having 6 and/or 7 carbon atoms, and the scents of both the components having an increased releasing property enhance the ripe aroma of the composition in cooperation. Specifically, the β-caryophyllene/fatty acid peak area value ratio in the final composition is, for example, preferably in the range of more than 0.0002% and less than 10 000%. More specifically, the lower limit thereof is, normally, preferably more than 0.0002%. The lower limit of the ratio is, in particular, preferably more than 0.0005%, further preferably more than 0.0008%, especially preferably more than 0.0010%, or more than 0.0020%, or more than 0.0030%, or more than 0.0040%, or more than 0.0050%, or more than 0.010%, or more than 0.050%, or more than 0.10%, or more than 0.50%, or more than 1.0%, or more than 5.0%, or more than 10.0%. On the other hand, the upper limit is not particularly limited, and is, for example, normally less than 10 000%, and in particular, preferably less than 9 000%, further preferably less than 8 000%, especially preferably less than 7 000%, or less than 6 000%, or less than 5 000%, or less than 4 000%, or less than 3 000%, or less than 2 000%, or less than 1 000%, or less than 500%, particularly preferably less than 300%. It is preferable to perform the drying treatment so that the ratio is decreased (that is, the value thereof decreases after the drying treatment). In calculation of the "peak area value ratio" in the present invention, values of the confirmation ion peak areas of the components (γ-terpinene: $m/z = 136$, caproic acid: $m/z = 87$, heptanoic acid: $m/z = 87$, β-ionone: $m/z = 177$, β-caryophyllene: $m/z = 133$) are used unless otherwise specified. It is preferable that one of the contents of a straight-chain fatty acid having 6 carbon atoms and a straight-chain fatty acid having 7 carbon atoms be a predetermined content described above, and it is preferable that both the contents of a straight-chain fatty acid having 6 carbon atoms and a straight-chain fatty acid having 7 carbon atoms be, respectively, predetermined contents described above. The relevant fatty acid may be a saturated fatty acid or an unsaturated fatty acid, and is preferably a saturated fatty acid (that is, caproic acid and heptanoic acid).

[Ratio of β-caryophyllene peak area value to peak area value of straight-chain fatty acid having 6 carbon atoms]

In the composition containing a dried edible plant according to the present invention, the ratio of a β-caryophyllene peak area value to a peak area value of a straight-chain fatty acid having 6 carbon atoms (referred to as a "β-caryophyllene/caproic acid peak area value ratio" as appropriate), when measured by extracting a volatile component at a sample temperature of 80°C for 20 minutes using solid phase micro extraction-gas chromatography mass spectrometry described later, is preferably above a predetermined ratio in the final composition. This imparts a ripe flavor, so that the composition has a more favorable taste. Although the principle thereof is unknown, it can be considered that β-caryophyllene which has relatively high volatility improves the scent releasing property of the intrinsically low-volatile straight-chain fatty acid having 6 carbon atoms, and the scents of both the components having an increased releasing property enhance the ripe aroma of the composition in cooperation. Specifically, the lower limit of the β-caryophyllene/caproic acid peak area value ratio in the final composition is, normally, preferably more than 0.0002%. The lower limit of the ratio is, in particular, preferably more than 0.0005%, further preferably more than 0.0008%, especially preferably more than 0.0010%, or more than 0.0020%, or more than 0.0030%, or more than 0.0040%, or more than 0.0050%, or more than 0.010%, or more than 0.050%, or more than 0.10%, or more than 0.50%, or more than 1.0%, or more than 5.0%, or more than 10.0%. On the other hand, the upper limit is not particularly limited, and is, for example, normally less than 50 000%, and in particular, preferably less than 40 000%, further preferably less than 30 000%, especially preferably less than 20 000%, or less than 10 00%, or less than 9 000%, or less than 8 000%, or less than 7 000%, or less than 6 000%, or less than 5 000%, or less than 4 000%, or less than 3 000%, or less than 2 000%, or less than 1 000%, or less than 500%, particularly preferably less than 300%. It is preferable to perform the drying treatment so that the ratio is decreased by the drying treatment (that is, the value thereof decreases after the drying treatment).

[Ratio of β-caryophyllene peak area value to peak area value of straight-chain fatty acid having 7 carbon atoms]

In the composition containing a dried edible plant according to the present invention, the ratio of a β-caryophyllene peak area value to a peak area value of a straight-chain fatty acid having 7 carbon atoms (referred to as a "β-caryophyllene/heptanoic acid peak area value ratio" as appropriate), when measured by extracting a volatile component at a sample temperature of 80°C for 20 minutes using solid phase micro extraction-gas chromatography mass spectrometry, is preferably above a predetermined ratio in the final composition. This imparts a ripe aroma to the composition, so that the composition has a more favorable taste. Although the principle thereof is unknown, it can be considered that β-caryophyllene which has relatively high volatility improves the scent releasing property of the intrinsically low-volatile straight-chain fatty acid having 7 carbon atoms, and the scents of both the components having an increased releasing property enhance the ripe aroma of the composition in cooperation. Specifically, the lower limit of the β-caryophyllene/heptanoic acid peak area value ratio in the final composition is, normally, preferably more than 0.002%. The lower limit of the ratio is, in particular, preferably more than 0.005%, further preferably more than 0.008%, especially preferably more than 0.010%, or more than 0.020%, or more than 0.030%, or more than 0.040%, or more than 0.050%, or more than 0.10%, or more than 0.50%, or more than 0.10%, or more than 0.50%, or more than 1.0%, or more than 5.0%, or more than 10.0%, or more than 20.0%, or more than 30.0%, particularly preferably more than 50.0%. On the other hand, the upper limit is not particularly limited, and is, for example, normally less than 30 000%, and in particular, preferably less than 20 000%, further preferably less than 10 000%, especially preferably less than 9 000%, or less than 8 000%, or less than 7 000%, or less than 6 000%, or less than 5 000%, or less than 4 000%, or less than 3 000%, or less than 2 000% or less than 1 000%, or less than 900%, or less than 800%, or less than 700%, particularly preferably less than 600%. It is preferable to perform the drying treatment so that the ratio is decreased by the drying treatment (that is, the value thereof decreases after the drying treatment).

It is more preferable that both the β-caryophyllene/caproic acid peak area value ratio and the β-caryophyllene/heptanoic acid peak area value ratio be, respectively, predetermined ratios because a ripe flavor is further imparted, so that the composition has a particularly favorable taste.

In the present invention, the straight-chain fatty acids having 6 and/or 7 carbon atoms, which are "contained" in the composition, may be those contained in a foodstuff such as an edible plant serving as a raw material for the composition containing a dried edible plant according to the present invention, or those that are added separately from the foodstuff, or those that result from production of the composition containing a dried edible plant according to the present invention, and it is only necessary that the total amount the fatty acids combined be a predetermined content and/or ratio. When the fatty acids are added separately from a foodstuff, the fatty acids may be in a state of being contained in the composition, or in a state of a refined and extracted reagent having a high purity. Specifically, a method can be employed in which two or more compositions having different contents of the fatty acids are mixed to adjust the content of the fatty acids. In particular, it is preferable that the straight-chain fatty acids having 6 and/or 7 carbon atoms be contained in the composition in a state of being contained in a dried edible plant. More specifically, it is preferable that the fatty acids be contained in the composition in a state of being contained in a dried vegetable (for example, an umbellifer, more preferably carrot, celery, parsley, cicely or coriander, particularly preferably carrot). The same applies to γ-terpinene, β-ionone, or β-caryophyllene, and it is preferable that each component be contained in the composition in a state of being contained in a dried edible plant. More specifically, it is preferable that each component be contained in the composition in a state of dried fruit (for example, a citrus, particularly Unshu Mikan, orange, lemon, hyuganatsu, or skin parts of citruses) containing γ-terpinene.

The method for adjusting the content ratio or peak area ratio of two or more components is not limited, and a method utilizing a difference in boiling point between the components can be employed. For example, a production method may be employed in which drying treatment is performed in a state in which both γ-terpinene having a relatively low boiling point and high volatility as compared to fatty acids and the straight-chain fatty acids having 6 and/or 7 carbon atoms are contained, whereby the ratio of the fatty acids to γ-terpinene is relatively increased to incorporate the components at a predetermined content ratio. For γ-terpinene and β-ionone, a production method may also be employed in which drying treatment is performed in a state in which both the components are contained, whereby the components are incorporated at a predetermined content ratio. Although the principle thereof is unknown, it is considered that as a result of performing drying treatment in a state in which both the components are contained, β-ionone having a relatively low boiling point and high volatility as compared to γ-terpinene improves the scent releasing property of γ-terpinene. The same applies to β-caryophyllene and the straight-chain fatty acids having 6 and/or 7 carbon atoms.

[Solid phase micro extraction-gas chromatography mass spectrometry]

In the present invention, the contents and peak area values of the components which are straight-chain fatty acids having 6 and/or 7 carbon atoms, γ-terpinene, β-ionone and β-caryophyllene in the composition containing a dried edible plant are measured by solid phase micro extraction-gas chromatography mass spectrometry (referred to as "SPME-GC-MS" or "SPME" as appropriate) in accordance with a usual method.

The solid phase micro extraction-gas chromatography mass spectrometry is a method in which a measurement sample is adsorbed by a SPME (solid phase micro extraction) method (a static extraction method in which a fiber is exposed to a gas phase to collect a volatile component on an adsorbent), and measurement is then performed by gas chromatography mass spectrometry (GS/MS). As a specific procedure, for example, a small amount (1 g) of a sample is weighed and charged in a 10-mL flat bottom vial, the vial is then sealed, the sample is adsorbed to an adsorption resin (SPME fiber) appropriate to the properties of a volatile component in the sample, and then treated with a heating and desorbing system to be introduced into gas chromatographic analyzer, thereby performing analysis. For measuring the content of a component in the sample, the sample and a standard sample diluted to any content are analyzed to grasp the confirmation ion peak area values of both samples, and the values are compared to each other to measure the content of the component in the sample.

After the analysis above, a part of the sample is applied to a mass spectrometer to obtain the mass spectrum, and the retention times of both components are verified based on the related ions of each component (γ-terpinene: m/z = 91, 93, 136, caproic acid: m/z = 60, 73, 87, heptanoic acid: m/z = 60, 73, 87, β-ionone: m/z = 91, 135, 177, β-caryophyllene: m/z = 91, 93, 133). The mass spectrometer (MS) used is a quadrupole type 7000C Mass Selective Detector (manufactured by Agilent Technologies, Inc.). Mass spectral analysis can be performed by carrying out an ionization method EI+ at an ionization potential of 70 eV, importing the result by a scan mode, and carrying out identification using ions characteristic to each component (γ-terpinene: m/z = 91, 93, 136, caproic acid: m/z = 60, 73, 87, heptanoic acid: m/z = 60, 73, 87, β-ionone: m/z = 91, 135, 177, β-caryophyllene: m/z = 91, 93, 133) as related ions, and the retention time of straight-chain fatty acids having 6 and/or carbon atoms, γ-terpinene, β-ionone and β-caryophyllene can be specified by specifying the retention time in which all these related ions in the standard product are detected. Examples of the measurement application software used include Unknowns Analysis (MassHnter Workstation Software Quantitative Analysis, version: B.09.00, Build: 9.0.647.0, manufactured by Agilent Technologies, Inc.). The term "m/z" in the present invention refers to a value detected in the range of -0.3 to +0.7 from the m/z center value of each component. For example, m/z = 136 indicates a cumulative value of ion peaks detected at 135.7 to 136.7.

Specifically, the solid phase micro extraction-gas chromatography mass spectrometric analysis is performed under the following conditions.

<Solid phase micro extraction conditions>

- SPME fiber StableFlex 50/30 μm, DVB/Carboxen/PDMS (manufactured by Supelco, Inc.)
- Volatile component extracting apparatus PAL3 RSI120 (manufactured by CTC Analytics AG)

Preheating: 80°C for 15 min

Stirring rate: 300 rpm
Volatile component extraction: 80°C for 20 min
Desorption time: 10 min

<Gas chromatography conditions>

- Measuring equipment: Agilent 7980B GC System (manufactured by Agilent Technologies, Inc.)
- GC column: DB-WAX (manufactured by Agilent Technologies, Inc.), length 30 m, opening diameter 0.25 mm, thickness 0.25 $\mu$m
- Carrier: He gas, gas flow rate 1.0 mL/min (constant flow)
- Temperature conditions: [40°C (3 min)]-[10°C/min]-[250°C (10 min)]

<Mass spectrometric analysis conditions>

- Measuring equipment: Agilent 7000C GC/MS Triple Quad (manufactured by Agilent Technologies, Inc.)
- Ionization method: EI (ionization potential 70 eV)
- Scan mass: m/z 29.0 to 350.0

Under the conditions above, authentic preparations of $\gamma$-terpinene (CAS Registry Number: 99-85-4, manufactured by Sigma-Aldrich Co. LLC, product code: 223190), caproic acid (CAS Registry Number: 142-62-1, manufactured by Tokyo Chemical Industry Co., Ltd., product code: H0105), heptanoic acid (CAS Registry Number: 111-14-8, manufactured by Tokyo Chemical Industry Co., Ltd., product code: H0030), $\beta$-ionone (CAS Registry Number: 14901-07-6, manufactured by Tokyo Chemical Industry Co., Ltd., product code: I0077) and $\beta$-caryophyllene (CAS Registry Number: 87-44-5, manufactured by Sigma-Aldrich Co. LLC, product code: 22075), whose contents are known, are adjusted by the above-described method, and the adjusted authentic preparations and a sample are subjected to analysis. The component in the sample can be quantitatively measured by comparison with the retention time of the standard product through analysis based on a mass spectral pattern by a mass spectrometer, and by comparison of the peak area values of confirmation ions ($\gamma$-terpinene: m/z = 136, caproic acid: m/z = 87, heptanoic acid: m/z = 87, $\beta$-ionone: m/z = 177 and $\beta$-caryophyllene: m/z = 133) between the adjusted authentic preparations and the sample in or around the retention time of the peak that seems to be the target component (for example, around a retention time of 5 to 11 minutes for $\gamma$-terpinene, around a retention time of 13 to 19 minutes for caproic acid, around a retention time of 14 to 20 minutes for heptanoic acid, around a retention time of 13 to 20 minutes for $\beta$-ionone, and around a retention time of 10 to 16 minutes for $\beta$-caryophyllene). The peak area value of confirmation ions may be determined by directly measuring the peak area of confirmation ions, or may be calculated from the peak area value of related ions. For example, from the peak area value of m/z = 91 which corresponds to related ions of $\gamma$-terpinene, the peak area value of m/z = 136 which corresponds to confirmation ions of $\gamma$-terpinene can be calculated on the basis of a mass spectral pattern (ratio between both ions) in a known mass spectral database (for example, a mass spectral database in National Institute of Standard and technology (NIST)).

When the content of each component in the composition is adjusted, a method can be employed in which two or more compositions having different contents of the component are mixed to adjust the content of the component. In the present invention, the units (for example, ppm and ppb) of numerical values including numerators and denominators are all on a weight basis.

[Dried edible plant]

The composition containing a dried edible plant according to the present invention contains an edible plant. The term "edible plant" in the present invention refers to a plant which contains its edible part and/or inedible part and is eaten or drunk by human. The edible plant in the present invention is not limited in any way as long as it is eaten or drunk by human, and examples thereof include vegetables, grains, mushrooms, fruits, potatoes, algae, nuts and pulses. Vegetables, fruits and nuts are particularly beneficially used. Specifically, it is possible to understand which food corresponds to the edible plant by, for example, referring to vegetables, grains, mushrooms, fruits, potatoes, algae, nuts and pulses in the classification described in "the Standard tables of Food Composition in Japan, 2015, (Seventh Revised version) Supplement, 2018" (see the Food composition tables provided by the Ministry of health, Labor and Welfare, in particular, Table 1 on page 236). These edible plants may be used alone or in any combination of two or more thereof.

These edible plants may be directly used or may be used after various treatments (e.g., drying, heating, harshness removal, peeling, seed removal, ripening, salting, and pericarp processing). The classification and the specific type (name) of a foodstuff can be determined based on the state of the whole plant including the inedible part. The site and the proportion of the inedible part can be naturally understood by those skilled in the art who handle the food or processed food products. For example, the "removed portion" and the "refuse" described in the Standard Tables of Food Composition in Japan, 2015, (seventh edition)" can be referred to and regarded as portion and proportion of the inedible part, respectively. The portion and the proportion of the edible parts can also be understood from the portion and the proportion of the inedible part in an edible plant. The edible part and/or the inedible part thereof may be used in any combination.

The composition containing a dried edible plant according to the present invention may contain only one edible plant, or may contain two or more edible plants. When the composition containing a dried edible plant according to the present invention contains two or more edible plants, the combination and the ratio of the edible plants are arbitrary. That is, the two or more edible plants may belong to the same class of edible plants, or may belong to two or more different classes of edible plants.

Specifically, the lower limit of the content of the edible plant in the composition containing a dried edible plant according to the present invention is, normally, preferably 10 mass% or more in terms of dry mass. The lower limit of the content of the edible plant is, in particular, preferably 12 mass% or more, further preferably 15 mass% or more, especially preferably 20 mass% or more, or 25 mass% or more, or 30 mass% or more, or 40 mass% or more, particularly preferably 50 mass% or more. On the other hand, the upper limit of the content of the edible plant in the composition of the present invention is not particularly limited, and is, normally, preferably 100 mass% or less. In the composition containing dried edible plant according to the present invention, the content of the edible plant with respect to the composition is not 100 mass%, the part of rest composition is not limited in any way as long as the effect of the present invention is not hindered, and powdery and/or chip-shaped compositions are preferable. The other component(s) can be appropriately selected depending on a flavor and quality desired for the final composition without being limited by the type, the combination and the intended use. Examples of the component may include dietary salt, sucrose and dextrin.

Hereinafter, specific examples of the edible plant contained in the composition containing a dried edible plant according to the present invention will be described, but the edible plant is not limited to these specific examples, and any edible plant can be used.

[Edible plant/vegetables]

Examples of the types of edible plants classified as the vegetables include, but are not limited to, radish, carrot, rutabaga, parsnip, turnip, black salsify, lotus root, beet (preferably beets (beet root): breed obtained by modifying the root of beet for food use), arrowhead, scallion, garlic, rakkyo, lily, kale, onion (particularly small onion), asparagus, udo, cabbage, lettuce, spinach, Chinese cabbage, oilseed rape, komatsuna, qing-geng-cai, garlic chive, green onion, Nozawana, sweet coltsfoot, chard (Swiss chard), mizuna, tomato (including grape tomato as a type of tomato), eggplant, pumpkin, bell pepper, cucumber, mioga, cauliflower, broccoli, edible chrysanthemum, bitter cucumber, okra, artichoke, zucchini, sugar beet, tiger nut, ginger, Japanese basil, wasabi, paprika, herbs (watercress, cilantro, water spinach, celery, tarragon, chive, chervil, sage, thyme, laurel, parsley, mustard green (leaf mustard), mugwort, basil, oregano, rosemary, peppermint, savory, lemongrass, dill, wasabi leaf, sansho leaf and stevia), bracken, osmund, and bamboo shoot. In particular, umbellifers (e.g., carrot, celery, parsley, cicely, coriander, udo, and mitsuba), labiates (e.g., thyme), and nightshades (e.g., tomato) are preferably used. Both the edible part and the inedible part of each of the above-described foodstuffs can be used.

When the composition containing a dried edible plant according to the present invention contains one or more types of edible plants classified as the vegetables, the total content thereof is normally 50 mass% or more, and, in particular, preferably 70 mass% or more, further preferably 90 mass% or more, particularly preferably substantially 100 mass%, in terms of dry mass, of the whole composition containing a dried edible plant. The upper limit is not particularly limited, and is normally 100 mass% or less of the whole composition containing a dried edible plant. It is preferable that the composition containing a dried edible plant contain one or more vegetables of the same type or different types in the above-described ratio, and it is more preferable that the composition containing a dried edible plant contain one or more vegetables of the same type in the above-described ratio.

In one embodiment, the vegetable is preferably an umbellifer which is likely to have a problem that the hay-like odor of $\gamma$-terpinene is generated. Specifically, one or more edible plants selected from the group consisting of carrot, celery, parsley, cicely and coriander are preferable, and carrot is particularly preferable. The carrot is not limited as long as it is western carrot and/or orient carrot (carrot which is generally called "Ninzin" and has a root length of about 10 cm to 20 cm). Examples of the carrot which can be used include Gosun Ninzin, Kyo Ninzin, Kinbi Ninzin, Mini Ninzin, Shima Ninzin, Murasaki Ninzin, Kuro Ninzin, Parisian Carrot, Onaga Ninzin, Lycopene Ninzin, Koi Kurenai (manufactured by NK Agri Co., Ltd.), Kyo Kurenai (manufactured by NK Agri Co., Ltd.), Beta Rich (manufactured by Sakata Seed Corporation), Gold Rabbit, Piccolo, yellow Harmony, Lovely Carrot, Kumamoto Naga Ninzin, Aiko (manufactured by Sumika Agrotech Co., Ltd.), Yubeni (manufactured by Sumika Agrotech Co., Ltd.), Doctor Carotene (manufactured by TAKII & Co., Ltd.), Violet Harmony, White Harmony, Christine (manufactured by Mikado Kyowa Seed Co., Ltd.), Beni Akari, Aroma Red (manufactured by Tohoku Seed Co., Ltd.), Hekinan Bizin (manufactured by JA Group Aichi), Koyo No. 2 (manufactured by TAKII & Co., Ltd.), Hitomi Gosun (manufactured by Kaneko Seeds Co., Ltd.), Magome Sansun Ninzin, Amabizin (Nanto Seed Co., Ltd.), Kokubu Ninzin, Beta Carrot, Otsuka Ninzin, Koigokoro (manufactured by TAKII & Co., Ltd.), Ayahomare (Fujii Seed Company, Ltd.), Snow Stick, and Kuroda Gosun.

When umbellifers (more preferably carrot, celery, parsley, cicely and coriander, particularly preferably carrot) are incorporated in the above-described ratio in the composition containing a dried edible plant contains, it is preferable to use a breed in which straight-chain fatty acids having 6 and/or 7 carbon atoms are contained at less than 10 ppb before drying and crushing. For example, Koyo No. 2 can be used.

When umbellifers (more preferably carrot, celery, parsley, cicely and coriander, particularly preferably carrot) are incorporated in the above-described ratio in the composition containing a dried edible plant contains, the lower limit of the ratio is, normally, preferably 10 mass% or more. The lower limit of the ratio is, in particular, preferably 12 mass% or more, further preferably 15 mass% or more, especially preferably 20 mass% or more, or 25 mass% or more, or 30 mass% or more, or 40 mass% or more, particularly preferably 50 mass% or more. On the other hand, the upper limit thereof is not particularly limited, and is normally 100 mass% or less.

[Edible plant/fruits]

Examples of the types of edible plants classified as the fruits include, but are not limited to, akebia, acerola, atemoya, avocado, apricot, strawberry, fig, Iyokan, Japanese plum, Unshu Mikan, olive, orange, persimmon, kabosu, Karin, kiwi fruit, kiwano, Chinese orange, guava, gooseberry, gummi, grapefruit, star fruit, cherry, pomegranate, sanbokan sour orange, shekwasha, watermelon, sudachi, plum, prune, bitter orange, tangor, tangelo, cherimoya, durian, hassaku orange, passion fruit, banana, papaya, pitaya, hyuganatsu, loquat, grape, blueberry, buntan, white sapote, ponkan orange, oriental melon, quince, mango, mangosteen, melon, peach, nectarine, bayberry, yuzu, lichi, lime, raspberry, goldenberry, date (fruit of dates), longan, apple, and lemon. In particular, citruses (particularly, Unshu Mikan, orange, lemon and hyuganatsu), mango, and the like can be suitably used. Both the edible part and the inedible part of each of the above-described foodstuffs can be used.

When the composition containing a dried edible plant according to the present invention contains one or more types of edible plants classified as the fruits, the total content thereof is normally 50 mass% or more, and in particular, preferably 70 mass% or more, further preferably 90 mass% or more, particularly preferably substantially 100 mass% or more, in terms of dry mass, of the whole composition containing a dried edible plant. The upper limit is not particularly limited, and is normally 100 mass% or less of the whole composition containing a dried edible plant. It is preferable that the composition containing a dried edible plant contain one or more fruits of the same type or different types in the above-described ratio, and it is more preferable that the composition containing a dried edible plant contain one or more fruits of the same type in the above-described ratio.

[Edible plant/nuts]

Examples of the types of edible plants classified as the nuts include, but are not limited to, almond, cashew nut, pecan, macadamia nut, pistachio, hazelnut, coconut, pignolia nut, sunflower seeds, pumpkinseeds, watermelon seeds, chinquapin, walnut, chestnut, ginkgo, sesame, and Brazil nut. In particular, nuts such as almond, cashew nut, macadamia nut, pistachio, hazelnut, coconut and walnut can be suitably used. Both the edible part and the inedible part of each of the above-described foodstuffs can be used.

When the composition containing a dried edible plant according to the present invention contains one or more types of edible plants classified as the nuts, the total content thereof is normally 50 mass% or more, and in particular, preferably 70 mass% or more, further preferably 90 mass% or more, particularly preferably substantially 100 mass% or more, in terms of dry mass, of the whole composition containing a dried edible plant. The upper limit is not particularly limited, and is normally 100 mass% or less of the whole composition containing a dried edible plant. It is preferable that the composition containing a dried edible plant contain one or more nuts of the same type or different types in the above-described ratio, and it is more preferable that the composition containing a dried edible plant contain one or more nuts of the same type in the above-described ratio.

The dried edible plant in the composition containing a dried edible plant according to the present invention is preferably in the form of a dried and crushed product of the edible plant, and more specifically, a powdery shape or a chip shape is preferable. The particle size is preferably in the range of 1 mesh-pass to $0.02 \, m^2/mL$ or more in terms of a specific surface area per unit volume of particles (fine particles and fine particle complexes) in the composition after ultrasonication.

[Edible plant/y-terpinene-containing edible plant]

Since the present invention relates to a method in which the hay-like odor of a dried edible plant containing γ-terpinene is suppressed by specific straight-chain fatty acids to produce a good-quality dried edible plant and composition containing a dried edible plant, the present invention can be beneficially used when the edible plant for use in the present invention is a γ-terpinene-containing edible plant in a predetermined ratio or higher in terms of dry mass. Specifically, in the "γ-terpinene-containing edible plant" in the present invention, the content of γ-terpinene is, for example, in the range of 0.01 ppb or more and 100 000 ppb or less in terms of dry mass. More specifically, the lower limit thereof is normally 0.01 ppb or more. The present invention is more beneficial when the lower limit of the content of γ-terpinene in the composition is, in particular, preferably 0.03 ppb or more, further preferably 0.05 ppb or more, especially preferably 0.10 ppb or more, or 0.20 ppb or more, or 0.30 ppb or more, or 0.40 ppb or more, or 0.50 ppb or more, or 1.00 ppb or more, or 5.00 ppb or more, or 10.0 ppb or more, or 15.0 ppb or more, or 20.0 ppb or more, or 30.0 ppb or more, or 40.0 ppb or more, or 50.0 ppb or more, or 80.0 ppb or more, or 100 ppb or more, or 150 ppb or more, or 200 ppb or more, or 400 ppb or more, or 600 ppb or more, or 800 ppb or more, or 1 000 ppb or more, or 1 200 ppb or more, or 1 500 ppb or more, particularly 2 000 ppb or more. On the other hand, the upper limit thereof is normally 100 000 ppb or less, and in particular, preferably 80 000 ppb or less, further preferably 60 000 ppb or less, especially preferably 50 000 ppb or less, or 40 000 ppb or less, or 30 000 ppb or less, or 20 000 ppb or less, or 15 000 ppb or less, or 10 000 ppb or less, particularly preferably 9 000 ppb or less. When a dried edible plant subjected to drying treatment (a dried chip having a certain size or greater or dried powder having a certain size or smaller) is used as the y-terpinene-containing edible plant, it is possible to use an edible plant in which the edible plant satisfies the above-described definition before or after drying treatment, and it is possible to use an edible plant in which the edible plant satisfies the above-described definition before and after drying treatment.

The γ-terpinene-containing edible plant may include one or more edible plants selected from vegetables, fruits and nuts. As vegetables, umbellifers, labiates and nightshades may be used, umbellifers, for example, carrot may be used, or umbellifers (more preferably carrot, celery, parsley, cicely and coriander, particularly preferably carrot) containing straight-chain fatty acids having 6 and/or 7 carbon atoms at less than 10 ppb before drying and crushing may be used. As fruits, citruses (for example, Unshu Mikan, orange, lemon, hyuganatsu and yuzu) or mango may be used. As nuts, nuts such as almond, cashew nut, macadamia nut, pistachio, hazelnut, coconut and walnut may be used.

[Mesh]

It is preferable that the composition (particularly, chip-shaped composition) containing a dried edible plant according to the present invention, while satisfying the above-described various requirements, have a size allowing the composition to pass through a certain mesh or smaller and satisfying the following requirement. The composition containing a dried edible plant and satisfying the following requirement particularly markedly has the problem to be solved by the present invention because it has a property of being easily degraded by oxygen, light and the like to easily generate the hay-like odor or the like, and highly releasing a flavor into the environment to make the flavor easily perceivable. Therefore, the present invention which enables the hay-like odor to be suppressed is particularly beneficial. Specifically, when the composition of the present invention is a chip-shaped composition, the upper limit of the size thereof is not particularly limited, and is preferably 1 mesh-pass, and the lower limit is preferably 10 mesh-on. It is preferable that the dried edible plant contained in the chip-shaped composition have the same size.

On the other hand, when the composition of the present invention is a powdery composition, the size thereof is preferably such that a specific surface area per unit volume after ultrasonication of a composition dispersion liquid as described later is in a predetermined range. The upper limit of the size is not particularly limited, and may be, for example, 10 mesh-pass, and the lower limit of the size is not particularly limited, and may be 635 mesh-on. It is preferable that the dried edible plant contained in the powdery composition have the same size.

The composition containing a dried edible plant according to the present invention can be classified as a composition of specific mesh-on and/or specific mesh-pass by sieve fractionation. In the present invention, the term "mesh-on" refers to a composition which remains on a sieve having a specific size, and the term "mesh-pass" refers to a composition which passes through a sieve having a specific size. The size of the composition containing a dried edible plant according to the present invention can be defined by sieves having different apertures. For example, the term "1 mesh-on" means remaining on a sieve of 1 mesh which has an aperture of 25.0 mm and a wire diameter of 3.55 mm (for example, a sieve corresponding to "1.00″″" defined as "Alternative" in Nominal Dimensions, Permissible Variation for Wire Cloth of Standard Testing Sieves (U.S.A.) Standard Series in U.S.A. Standard Testing Sieves ASTM Specifications E 11-04), and the term "1 mesh-pass" means passing down through the sieve. Similarly, the term "10 mesh-on" means remaining on a sieve of 10 mesh which has an aperture of 2.0 mm and a wire diameter of 0.9 mm (for example, a sieve corresponding to "No. 10" defined as "Alternative" in Nominal Dimensions, Permissible Variation for Wire Cloth of Standard Testing Sieves (U.S.A.) Standard Series in U.S.A. Standard Testing Sieves ASTM Specifications E 11-04), and the term "10 mesh-pass" means passing down through the sieve. Further, the term "635 mesh-on" means remaining on a sieve of 635 mesh which has an aperture of 20 $\mu$m and a wire diameter of 0.02 mm (for example, a sieve corresponding to "No. 635" defined as "Alternative" in Nominal Dimensions, Permissible Variation for Wire Cloth of Standard Testing Sieves (U.S.A.) Standard Series in U.S.A. Standard Testing Sieves ASTM Specifications E 11-04) .

In the present invention, a dry composition containing a dried edible plant is measured. More specifically, 100 g of a sample of a composition containing a dried edible plant (20°C), which is to be measured, is evenly spread on an uppermost sieve having the largest aperture, among sieves vertically stacked in descending order of the aperture (for example, 1 mesh and 10 mesh in this order from the top), and left standing for 1 minute while being lightly vibrated. In this way, fractionation can be performed. In the present invention, the size of a composition having a size of more than 2 000 $\mu$m (particularly, a chip-shaped composition) can be defined by the method described above.

[Specific surface area per unit volume before ultrasonication of composition dispersion liquid ($\gamma_B$)]

It is preferable that the composition containing a dried edible plant according to the present invention (particularly, powdery composition) satisfy, in addition to the above-described various requirements, the following requirement for the specific surface area per unit volume of particles in the composition before application of disturbance, that is, before ultrasonication ($\gamma_B$). Specifically, the specific surface area per unit volume of particles (fine particles and fine particle complexes) in the composition before application of disturbance to the composition dispersion liquid, that is, before ultrasonication ($\gamma_B$) is, normally, preferably 0.02 m$^2$/mL or more. The specific surface area ($\gamma_B$) is, in particular, preferably 0.03 m$^2$/mL or more, further preferably 0.04 m$^2$/mL or more, especially preferably 0.05 m$^2$/mL or more, or 0.10 m$^2$/mL or more, particularly 0.15 m$^2$/mL or more. On the other hand, the upper limit of the specific surface area ($\gamma_B$) is not limited, and may be normally 2.00 m$^2$/mL or less, and in particular, 1.90 m$^2$/mL or less, or 1.80 m$^2$/mL or less, especially 1.70 m$^2$/mL or less, or 1.60 m$^2$/mL or less, or 1.50 m$^2$/mL or less, or 1.40 m$^2$/mL or less, or 1.30 m$^2$/mL or less, or 1.20 m$^2$/mL or less, or 1.10 m$^2$/mL or less, particularly 1.00 m$^2$/mL or less. For the measurement conditions for the particle size (e.g., d50 or d90) before ultrasonication, measurement can be performed by a procedure described later using ethanol as a solvent. For the dried edible plant (particularly, powdery dried edible plant), the range of the specific surface area is preferably the same as above.

[Specific surface area per unit volume after ultrasonication of composition dispersion liquid ($\gamma_A$)]

It is preferable that the composition containing a dried edible plant according to the present invention (particularly, powdery composition) satisfy, in addition to the above-described various requirements, the following requirement for the specific surface area per unit volume of particles (including fine particles crushed by disturbance and non-crushed fine particle complexes) in the composition after application of disturbance, that is, after ultrasonication ($\gamma_A$). Specifically, the specific surface area per unit volume of particles (fine particles and fine particle complexes) in the composition after application of disturbance to the composition dispersion liquid, that is, after ultrasonication ($\gamma_A$) is, for example, preferably in the range of 0.02 m$^2$/mL or more and 2.00 m$^2$/mL or less. More specifically, the lower limit thereof is, normally, preferably 0.02 m$^2$/mL or more. The lower limit of the specific surface area ($\gamma_A$) is, in particular, in the range of preferably 0.03 m$^2$/mL or more, further preferably 0.04 m$^2$/mL or more, especially preferably 0.05 m$^2$/mL or more, or 0.10 m$^2$/mL or more, particularly preferably 0.15 m$^2$/mL or more. On the other hand, the upper limit of the specific surface area ($\gamma_A$) is not limited, and may be normally 2.00 m$^2$/mL or less, and in particular, 1.90 m$^2$/mL or less, particularly 1.80 m$^2$/mL or less. In the present invention, unless otherwise specified, the term "ultrasonication" means that an ultrasonic wave with a frequency of 40 kHz is applied at a power of 40 W for 3 minutes, and for the measurement conditions for the particle size after ultrasonication, measurement can be performed by a procedure described later using ethanol as a solvent. For the dried edible plant (particularly, powdery dried edible plant), the range of the specific surface area is preferably the same as above.

It is preferable that the composition of the present invention have a property of being crushed by disturbance, more specifically, the ratio of specific surface areas per unit volume of particles (fine particles and fine particle complexes) in the composition before and after application of disturbance to the composition dispersion liquid, i.e., before and after ultrasonication, that is, the ($\gamma_B/\gamma_A$) value (referred to a "crush ratio as appropriate) satisfy a predetermined range. Specifically, the ($\gamma_B/\gamma_A$) value is, for example, preferably in the range of 0.01 or more and 0.99 or less. More specifically, the upper limit thereof is preferably 0.99 or less. The upper limit of the ratio is, in particular, preferably 0.95 or less, further preferably 0.90 or less, especially preferably 0.85 or less, particularly preferably 0.80 or less. The lower limit of the ($\gamma_B/\gamma_A$) value is not limited, and is, normally, preferably 0.01 or more, or 0.10 or more. For the dried edible plant (particularly, powdery dried edible plant), the ratio of the specific surface area ($\gamma_B/\gamma_A$) is preferably the same as above. Although the principle thereof is unknown, it is considered that particles are combined to form complexes, so that the specific surface area decreases, resulting in suppression of generation of the hay-like odor. For formation of complexes, it may be preferable to perform dry crushing in which contact between particles containing a water-soluble component such as a saccharide occurs, and the resulting composition is preferably a composition having a water content on a dry basis equal to or smaller than a predetermined ratio, and a predetermined ($\gamma_B/\gamma_A$) value.

Further, in the composition containing a dried edible plant according to the present invention (particularly, powdery composition), the number-based average diameter of particles (including fine particles crushed by disturbance and non-crushed fine particle complexes) in the composition after application of disturbance to the composition dispersion liquid, that is, after ultrasonication is preferably in a specific range because the composition has a good texture. Specifically, the number-based average diameter of particles (fine particles and fine particle complexes) in the composition after application of disturbance, that is, after ultrasonication is, for example, preferably in the range of 0.1 $\mu$m or more and less than 30 $\mu$m. More specifically, the upper limit thereof is preferably less than 30 $\mu$m. The upper limit of the number-based average diameter is, in particular, preferably 25 $\mu$m or less, further preferably 20 $\mu$m or less, especially preferably 15 $\mu$m or less, particularly preferably 10 $\mu$m or less. The lower limit is not particularly specified, and is preferably 0.1 $\mu$m or more from the viewpoint of industrial convenience. For the measurement conditions for the particle size after ultrasonication, measurement can be performed by a procedure described later using ethanol as a solvent. For the dried edible plant (particularly, powdery dried edible plant), the number-based average diameter is preferably the same as above. Further, a composition in which the number-based average diameter after ultrasonication is greater than a predetermined value has a large surface area, and thus may be easily degraded, but by setting the ($\gamma_B/\gamma_A$) value of the composition to be in a predetermined range, a composition which has a good texture and is unlikely to generate the hay-like odor can be obtained, which is preferable.

In the present invention, the specific surface area per unit volume before and after ultrasonication and the number-based average diameter before and after ultrasonication are measured under the following conditions after the composition dispersion liquid containing a dried edible plant is disturbed. First, the solvent used at the time of measurement is ethanol, which hardly affects the structure of a sample at the time of measurement of a composition containing a dried edible plant. In the measurement, a composition dispersion liquid obtained by diluting the sample with the solvent and suspending the sample in advance is used to perform the measurement with the sample homogeneously suspended in the solvent. Specifically, 1 g of the sample is immersed in 50 g of ethanol, and left standing for about 5 minutes, the mixture is then thoroughly stirred with a spatula to be suspended (this liquid is referred to as a "suspension liquid" as appropriate), and the suspension liquid is strained through a sieve of 8 mesh which has an aperture of 2.36 mm and a wire diameter of 1.0 mm (for example, a sieve corresponding to "No. 8" defined as "Alternative" in Nominal Dimensions, Permissible Variation for Wire Cloth of Standard Testing Sieves (U.S.A.) Standard Series in U.S.A. Standard Testing Sieves ASTM Specifications E 11-04). The thus-obtained solution (referred to as a "2 mass% ethanol dispersion liquid" or a "composition dispersion liquid" as appropriate) is used to perform the measurement. More specifically, 100 g of the suspension liquid (20°C) is evenly sprayed over a sieve and treated until the weight of a fraction on the sieve becomes constant, and the solution having passed through the sieve is taken as a 2 mass% ethanol dispersion liquid, and used for the measurement. The laser diffraction particle size distribution analyzer used for the measurement is a laser diffraction particle size distribution analyzer having a measurement range of at least from 0.02 to 2 000 $\mu$m by a laser diffraction scattering method. For example, Microtrac MT3300 EXII system of MicrotracBEL Corporation is used, and as the measurement application software, for example, DMS2 (Data Management System version 2, MicrotracBEL Corporation) is used. When the measurement apparatus and the software above are used, measurement is performed by pressing down the washing button of the software to implement washing, pressing down the set zero button of the software to implement zero adjustment, and directly charging a sample by sample loading until the concentration of the sample falls within an appropriate range. A sample before disturbance, i.e., a sample not subjected to ultrasonication, is subjected to laser diffraction at a flow rate of 60% for a measurement time of 10 seconds immediately after the concentration of the sample is adjusted within an appropriate range within two rounds of sample loading after the sample is put, and the result is used as the measured value. On the other hand, when a sample after disturbance, i.e., a sample subjected to ultrasonication is measured, the sample is then put, and ultrasonication (treatment with an ultrasonic wave with a frequency of 40 kHz at a power of 40 W for 3 minutes), followed by the measurement. In this case, a sample not subjected to ultrasonication is put, the concentration is adjusted within an appropriate range by sample loading, and the ultrasonication button of the software is then pressed down to perform ultrasonication. Subsequently, defoaming is performed three times, and then sample loading is performed again. Immediately after verification that the concentration is still within the appropriate range, laser diffraction is performed at a flow rate of 60% for a measurement time of 10 seconds, and the result can be used as the measured value. The parameters at the time of measurement are, for example, distribution display: volume, particle refractive index: 1.60, solvent refractive index: 1.36, upper limit of measurement ($\mu$m) = 2 000.00 $\mu$m, and lower limit of measurement ($\mu$m) = 0.021 $\mu$m.

In the present invention, the specific surface area per unit volume of the composition indicates a specific surface area per unit volume (1 mL) when particles measured using a laser diffraction particle size distribution analyzer are assumed to be spherical. The specific surface area per unit volume of particles assumed to be spherical is a numerical value based on a measurement mechanism different from a measured value reflecting the component, the surface structure and the like of the particles (a specific surface area per volume or per mass which is determined by a transmission method, a gas absorption method or the like). The specific surface area per unit volume of particles assumed to be spherical is determined from $6 \times \Sigma(ai) \div \Sigma(ai \cdot di)$, where ai is a surface area per particle, and di is a particle size. The term "number-based average diameter" in the present invention refers to an average diameter determined from a virtual number distribution determined by calculation on the assumption that particles measured using a laser diffraction particle size distribution analyzer are spherical. The number-based average diameter is calculated from $\Sigma(v/d^2)/\Sigma(v/d^3)$ (d: representative value of particle diameter channels, v: percent on a volume basis for each channel), and gives a numerical value significantly different from that of the volume-based average diameter.

In the determination of the specific surface area and the number-based average diameter per unit volume of the composition, it is preferable to measure the particle size distribution at each channel (CH) and then determine the specific surface area and the number-based average diameter using the particle size for each measurement channel shown in Table 1 below as the standard. Specifically, the particle frequency in % of each channel (also referred to as "particle frequency in % for XX channel") can be determined by measuring the frequency of particles that are not larger than the particle size specified for each of the channels shown in Table 1 below and larger than the particle size (in the channel largest in the measurement range, measurement lower limit of particle size) specified for the channel of a larger number by one for each channel shown in Table 1 and using the total frequency of all channels within the measurement range as the denominator. For example, the particle frequency in % of channel 1 represents the frequency in % of particles having sizes of 2 000.00 μm or less and higher than 1 826.00 μm.

[Table 1]

| Channel | Particle size (μm) | Channel | Particle size (μm) | Channel | Particle size (μm) | Channel | Particle size (μm) |
|---|---|---|---|---|---|---|---|
| 1 | 2000 | 37 | 88 | 73 | 3.889 | 109 | 0.172 |
| 2 | 1826 | 38 | 80.7 | 74 | 3.566 | 110 | 0.158 |
| 3 | 1674 | 39 | 74 | 75 | 3.27 | 111 | 0.145 |
| 4 | 1535 | 40 | 67.86 | 76 | 2.999 | 112 | 0.133 |
| 5 | 1408 | 41 | 62.23 | 77 | 2.75 | 113 | 0.122 |
| 6 | 1291 | 42 | 57.06 | 78 | 2.522 | 114 | 0.111 |
| 7 | 1184 | 43 | 52.33 | 79 | 2.312 | 115 | 0.102 |
| 8 | 1086 | 44 | 47.98 | 80 | 2.121 | 116 | 0.094 |
| 9 | 995.6 | 45 | 44 | 81 | 1.945 | 117 | 0.086 |
| 10 | 913 | 46 | 40.35 | 82 | 1.783 | 118 | 0.079 |
| 11 | 837.2 | 47 | 37 | 83 | 1.635 | 119 | 0.072 |
| 12 | 767.7 | 48 | 33.93 | 84 | 1.499 | 120 | 0.066 |
| 13 | 704 | 49 | 31.11 | 85 | 1.375 | 121 | 0.061 |
| 14 | 645.6 | 50 | 28.53 | 86 | 1.261 | 122 | 0.056 |
| 15 | 592 | 51 | 26.16 | 87 | 1.156 | 123 | 0.051 |
| 16 | 542.9 | 52 | 23.99 | 88 | 1.06 | 124 | 0.047 |
| 17 | 497.8 | 53 | 22 | 89 | 0.972 | 125 | 0.043 |
| 18 | 456.5 | 54 | 20.17 | 90 | 0.892 | 126 | 0.039 |
| 19 | 418.6 | 55 | 18.5 | 91 | 0.818 | 127 | 0.036 |
| 20 | 383.9 | 56 | 16.96 | 92 | 0.75 | 128 | 0.033 |
| 21 | 352 | 57 | 15.56 | 93 | 0.688 | 129 | 0.03 |
| 22 | 322.8 | 58 | 14.27 | 94 | 0.63 | 130 | 0.028 |
| 23 | 296 | 59 | 13.08 | 95 | 0.578 | 131 | 0.026 |
| 24 | 271.4 | 60 | 12 | 96 | 0.53 | 132 | 0.023 |
| 25 | 248.9 | 61 | 11 | 97 | 0.486 | | |

(continued)

| Channel | Particle size (μm) | Channel | Particle size (μm) | Channel | Particle size (μm) | Channel | Particle size (μm) |
|---|---|---|---|---|---|---|---|
| 26 | 228.2 | 62 | 10.09 | 98 | 0.446 | | |
| 27 | 209.3 | 63 | 9.25 | 99 | 0.409 | | |
| 28 | 191.9 | 64 | 8.482 | 100 | 0.375 | | |
| 29 | 176 | 65 | 7.778 | 101 | 0.344 | | |
| 30 | 161.4 | 66 | 7.133 | 102 | 0.315 | | |
| 31 | 148 | 67 | 6.541 | 103 | 0.289 | | |
| 32 | 135.7 | 68 | 5.998 | 104 | 0.265 | | |
| 33 | 124.5 | 69 | 5.5 | 105 | 0.243 | | |
| 34 | 114.1 | 70 | 5.044 | 106 | 0.223 | | |
| 35 | 104.7 | 71 | 4.625 | 107 | 0.204 | | |
| 36 | 95.96 | 72 | 4.241 | 108 | 0.187 | | |

[Hue, color value and chroma defined in Munsell color system]

In the composition containing a dried edible plant in the present invention, the hue defined in the Munsell color system (JIS Z 8721) is preferably in a predetermined range because generation of the hay-like odor during storage can be suppressed. Although the principle thereof is unknown, it is considered that precursor components accumulated by decomposition of fat/oil having a specific color tone, such as β-carotene, undergo oxidative degradation, resulting in generation of the hay-like odor. That is, a composition whose hue is in the relevant range is shown to have quality such that the degree of decomposition of fat/oil having a specific color tone is relatively low. For this reason, a composition whose hue is in a predetermined range may have a property of being unlikely to generate the hay-like odor. Specifically, the hue of the final composition is preferably from 0 YR to 10 YR (0 Y) or from 0 Y to 5 Y. The hue is, in particular, preferably from 0 YR to 10 YR, or preferably from 2.5 YR to 10 YR, or preferably from 2.5 YR to 7.5 YR, particularly preferably from 5.0 YR to 7.5 YR. It is further more preferable that the dried edible plant in the composition (in particular, umbellifers, more preferably carrot, celery, parsley, cicely and coriander, particularly preferably carrot) have the above-described hue.

In the composition containing a dried edible plant in the present invention, the color value defined in the Munsell color system (JIS Z 8721) is more preferably in a predetermined range with the hue being in the above-described range because generation of the hay-like odor during storage can be suppressed. That is, a composition whose color value is in the relevant range is shown to have quality such that the degree of decomposition of fat/oil having a specific color tone is relatively low. Specifically, the color value of the final composition is, for example, preferably in the range of 1.0 or more and less than 9.0. More specifically, the upper limit thereof is preferably less than 9.0, particularly preferably less than 8.5. On the other hand, the lower limit is not particularly limited, and is preferably 1.0 or more, or 3.0 or more, particularly preferably 5.0 or more. It is further more preferable that the color value of the dried edible plant in the composition (in particular, umbellifers, more preferably carrot, celery, parsley, cicely and coriander, particularly preferably carrot) be in the above-described range with its hue being in the above-described range.

Further, in the composition containing a dried edible plant in the present invention, the chroma defined in the Munsell color system (JIS Z 8721) is more preferably in a predetermined range with the hue being in the above-described range because generation of the hay-like odor during storage can be suppressed. That is, a composition whose chroma is in the relevant range is shown to have quality such that the degree of decomposition of fat/oil having a specific color tone is relatively low. Specifically, the chroma of the final composition is, for example, preferably in the range of more than 4 and 14 or less. More specifically, the lower limit thereof is preferably more than 4. The lower limit of the chroma is, in particular, preferably more than 5, further preferably more than 6, particularly preferably more than 7. On the other hand, the upper limit is not particularly limited, and may be 14 or less. It is more preferable that both the color value and the chroma be in predetermined ranges, respectively, because generation of the hay-like odor during storage is easily suppressed. It is further more preferable that the chroma of the dried edible plant in the composition (in particular, umbellifers, more preferably carrot, celery, parsley, cicely and coriander, particularly preferably carrot) be in the above-described range with its hue being in the above-described range, and it is particularly preferable that both the color value and the chroma of the dried edible plant be in predetermined ranges, respectively.

Referring to the Munsell hue circle of the Munsell color system (Figure 1), the overall hue is expressed by the five principal hues of R, Y, G, B and P with YR, GY, BG, PB and RP added at the midpoints between the principal hues, respectively, to provide ten basic hues, where the basic hues are circularly arranged in a clockwise manner, and the intervals between the basic hues are each equiangularly divided into tenths, and calibrated and designated as, for example, 1 Y to 10 Y. Unless otherwise specified, the hue range described in the present invention is a range in a clockwise direction in the table of Figure 1, and as an example of a boundary portion between the principal hues, the boundary portion between YR and Y can be expressed as 10 YR or 0 Y. For example, from 0 YR to 10 YR or from 0 Y to 5 Y indicates a range of the hue continuously changing from 0 YR to 10 YR (or 0 Y) to 5 Y (see Figure 1). In the color value defined in the Munsell color system, ideal black corresponding to a reflectance of 0 is defined as 0, and ideal white corresponding to complete reflection is defined as 10.

[Composition]

The embodiment of the composition containing a dried edible plant in the present invention is not limited as long as it satisfies the above-described configuration. The embodiment of the composition may be that of a crushed composition as described above, a dried edible plant (particularly a dried and crushed edible plant) itself, or a food/drink as long as the composition contains a dried edible plant.

The form of the composition may be any of a liquid form, a semi-solid form or a solid form. For example, for a semi-solid form, there is no particular limitation as long as the composition is a semi-solid having flowability, and the composition may be pasty food obtained by incorporating a dried edible plant in fat/oil which is liquid at ordinary temperature and/or fat/oil which is solid at ordinary temperature. Further, for a solid form, the composition can have any of various shapes such as a powdery shape, a granular shape, a tablet shape, a rod shape, a plate shape and a block shape. In particular, a powdery shape is preferable from the viewpoint of more significantly exhibiting the effect of the present invention.

Further, when the composition of the present invention is a food/drink, the type thereof is not limited in any way as long as it is a food/drink satisfying the above-described configuration, and examples thereof include semi-solid or solid foods such as foods (e.g., puree and pasta), liquid foods such as drinks (e.g., soup, smoothie and paste), liquid, semi-solid, or solid food/drink such as seasonings (e.g., mayonnaise, dressing, butter, and margarine), semi-solid or solid foods such as confectioneries (e.g., granola, sticks, crackers, caramel, gummies, and chips), and powdery foods such as dry seasonings. In particular, stick-shaped foods and chips containing a dried edible plant.

[Food/drink containing composition]

The present invention also includes food/drinks in which the composition containing a dried edible plant according to the present is incorporated by a method such as addition and blending. When the composition containing a dried edible plant according to the present invention is added to food/drink in a predetermined ratio or higher, the final food/drink has good quality. The ratio is not particularly limited, may be appropriately adjusted, and for example, it is preferable to incorporate the composition containing a dried edible plant according to the present invention in the whole food/drink at 10 mass% or more and 100 mass% or less. More specifically, the lower limit thereof is preferably 10 mass% or more, more preferably 20 mass% or more, more preferably 30 mass% or more, particularly preferably 40 mass% or more. The upper limit is preferably 100 mass% or less.

The form of the food/drink may be any of a liquid form, a semi-solid form and a solid form. For a liquid form, the food/drink may be a RTD drink which can be directly drunk without being diluted, or a from-concentrate drink. For a semi-solid form, there is no particular limitation as long as the food/drink is a semi-solid having flowability, and the food/drink can be, for example, a pasty food, or a jelly-like drink which is sucked through a suction opening or a straw provided on a container. Further, for a solid form, the food/drink can have any of various shapes such as a powdery shape, a granular shape, a tablet shape, a rod shape, a plate shape and a block shape. In particular, powdery foods are preferable from the viewpoint of more significantly exhibiting the effect of the present invention.

The type of food/drink is not limited in any way, and examples thereof include semi-solid or solid foods such as foods (e.g., puree and pasta), liquid foods such as drinks (e.g., soup, smoothie and paste), liquid, semi-solid, or solid food/drink such as seasonings (e.g., mayonnaise, dressing, butter, and margarine), semi-solid or solid foods such as confectioneries (e.g., granola, sticks, crackers, caramel, gummies, and chips), and powdery foods such as dry seasonings.

[Production method]

The composition of the present invention can be produced by, for example, crushing an edible plant containing

$\gamma$-terpinene at 0.01 ppb or more and 100 000 ppb or less in terms of dry mass, incorporating straight-chain fatty acids having 6 and/or 7 carbon atoms so that the total content thereof is 0.05 ppb or more and 200 000 ppb or less in terms of dry mass and the ratio of the total content of the straight-chain fatty acids having 6 and/or 7 carbon atoms to the content of $\gamma$-terpinene is 0.001 mass% or more, and drying the edible plant at any stage until the water content on a dry basis is less than 30 mass%. The term "incorporate" in the present invention means incorporating a component while adjusting the proportion of the component in the composition, and as the method for the adjustment, the adjustment may be performed using a component contained in a foodstuff such as an edible plant as a raw material for the composition, or using a component added separately from the foodstuff, or using a component that results from production of the composition containing a dried edible plant according to the present invention, or using the components in combination.

According to the present invention, it is also possible to provide a method for enhancing storability of a composition or a food/drink containing a dried edible plant having a water content on a dry basis of less than 30 mass%, the method comprising incorporating $\gamma$-terpinene at 0.01 ppb or more and 100 000 ppb or less in terms of dry mass, incorporating straight-chain fatty acids having 6 and/or 7 carbon atoms so that the total content thereof is 0.05 ppb or more and 200 000 ppb or less in terms of dry mass, and performing adjustment so that the ratio of the total content of the straight-chain fatty acids having 6 and/or 7 carbon atoms to the content of $\gamma$-terpinene in the composition and/or food/drink is 0.001 mass% or more in terms of dry mass.

Specifically, the content of $\gamma$-terpinene and the total content of the straight-chain fatty acids having 6 and/or 7 carbon atoms may be adjusted before, during and/or after the edible plant is dried to be formed into a powdery shape and/or a chip shape, and it is preferable to perform the adjustment at least after the drying treatment. The arrangement may be performed with the composition contained in a food/drink. Further, the adjustment may be performed before, during and/or after the crushing treatment. The method for the adjustment is not limited, and for example, $\gamma$-terpinene or straight-chain fatty acids having 6 and/or 7 carbon atoms may be externally added to the composition containing a dried edible plant, or a method may be used in which the content of $\gamma$-terpinene and the total content of the straight-chain fatty acids having 6 and/or 7 carbon atoms are each adjusted to be in a desired range by performing predetermined drying treatment. It is preferable to use a method in which the content of $\gamma$-terpinene and the total content of the straight-chain fatty acids having 6 and/or 7 carbon atoms are each adjusted to be in a desired range by performing predetermined drying treatment on an edible plant containing $\gamma$-terpinene.

According to the present invention, the $\gamma$-terpinene-derived hay-like odor of the composition is suppressed to maintain quality even if the composition is not stored under refrigeration, which is preferable. Therefore, the present invention includes a method for improving the hay-like odor of a dried edible plant and enhancing storability, the method comprising crushing an edible plant containing $\gamma$-terpinene at 0.01 ppb or more and 100 000 ppb or less in terms of dry mass, incorporating straight-chain fatty acids having 6 and/or 7 carbon atoms so that the total content thereof is 0.05 ppb or more and 200 000 ppb or less in terms of dry mass, and drying the edible plant at any stage until the water content on a dry basis is less than 30 mass%. In particular, it is more preferable that $\beta$-ionone be contained in a predetermined ratio because the effect is maintained for a long period of time. In particular, when the composition has a powdery shape, the present method is more beneficial because the hay-like odor is easily generated due to the increased surface area.

In the present invention, performing drying treatment at any stage after crushing an edible plant containing $\gamma$-terpinene in a predetermined ratio in terms of dry mass (y-terpinene-containing edible plant) is beneficial because a hay-like odor suppressing effect is exhibited. Specifically, the content of $\gamma$-terpinene is, for example, preferably in the range of 0.01 ppb or more and 100 000 ppb or less. More specifically, the lower limit thereof is normally 0.01 ppb or more. The lower limit of the content of $\gamma$-terpinene is, in particular, preferably 0.03 ppb or more, further preferably 0.05 ppb or more, especially preferably 0.10 ppb or more, or 0.20 ppb or more, or 0.30 ppb or more, or 0.40 ppb or more, or 0.50 ppb or more, or 1.00 ppb or more, or 5.00 ppb or more, or 10.0 ppb or more, or 15.0 ppb or more, or 20.0 ppb or more, or 30.0 ppb or more, or 40.0 ppb or more, or 50.0 ppb or more, or 80.0 ppb or more, or 100 ppb or more, or 150 ppb or more, or 200 ppb or more, or 400 ppb or more, or 600 ppb or more, or 800 ppb or more, or 1 000 ppb or more, or 1 200 ppb or more, or 1 500 ppb or more, particularly preferably 2 000 ppb or more. On the other hand, the upper limit thereof is normally 100 000 ppb or less, and in particular, preferably 80 000 ppb or less, further preferably 60 000 ppb or less, especially preferably 50 000 ppb or less, or 40 000 ppb or less, or 30 000 ppb or less, or 20 000 ppb or less, or 15 000 ppb or less, or 10 000 ppb or less, particularly preferably 9 000 ppb or less.

The present invention is not particularly limited as long as it crushes an edible plant containing $\gamma$-terpinene in a predetermined ratio in terms of dry mass ($\gamma$-terpinene-containing edible plant), and incorporates straight-chain fatty acids having 6 and/or 7 carbon atoms so that the total content thereof may be in a predetermined ratio in terms of dry mass. Specifically, the ratio of the fatty acids is, for example, preferably in the range of 0.05 ppb or more and 200 000 ppb or less. More specifically, the lower limit thereof is normally 0.05 ppb or more. The lower limit of the content of the fatty acids is, in particular, preferably 0.10 ppb or more, further preferably 0.50 ppb or more, especially preferably 1.00 ppb or more, or 3.0 ppb or more, or 5.0 ppb or more, or 7.0 ppb or more, or 9.0 ppb or more, or 10.0 ppb or more, or 12.0 ppb or more, or 15.0 ppb or more, or 18.0 ppb or more, particularly preferably 20.0 ppb or more. On the other hand, the upper limit is not particularly limited, and is, for example, normally 200 000 ppb or less, and in particular, preferably 180 000 ppb or less, further preferably 150 000 ppb or less, especially preferably 120 000 ppb or less, or 90 000 ppb or less, or 60 000 ppb or less, particularly preferably 30 000 ppb or less.

The present invention is not particularly limited as long as it crushes an edible plant containing γ-terpinene in a predetermined ratio in terms of dry mass (γ-terpinene-containing edible plant), and incorporates straight-chain fatty acids having 6 and/or 7 carbon atoms so that the ratio of the total content of the straight-chain fatty acids having 6 and/or 7 carbon atoms to the content of γ-terpinene may be equal to a predetermined ratio or higher in terms of dry mass. Specifically, the ratio of the total content of the straight-chain fatty acids to the content of γ-terpinene is, for example, preferably in the range of 0.001 mass% or more and less than 10 000 mass%. More specifically, the lower limit thereof is normally 0.001 mass% or more. The lower limit of the ratio is, in particular, preferably 0.002 mass% or more, further preferably 0.003 mass% or more, especially preferably 0.004 mass% or more, or 0.005 mass% or more, or 0.006 mass% or more, or 0.007 mass% or more, or 0.008 mass% or more, or 0.009 mass% or more, or 0.010 mass% or more, or 0.040 mass% or more, or 0.060 mass% or more, or 0.080 mass% or more, or 0.10 mass% or more, or 0.30 mass% or more, or 0.60 mass% or more, or 1.00 mass% or more, or 2.00 mass% or more, or 3.00 mass% or more, or 4.00 mass% or more, or 5.00 mass% or more, particularly preferably 6.00 mass% or more. On the other hand, the upper limit is not particularly limited, and may be normally less than 10 000 mass%, and in particular, less than 8 000 mass%, or less than 6 000 mass%, especially less than 5 500 mass%, or less than 4 500 mass%, or less than 4 000 mass%, or less than 3 500 mass%, or less than 3 000 mass%, or less than 2 500 mass%, or less than 2 000 mass%, or less than 1 500 mass%, or less than 1 000 mass%, or less than 900 mass%, or less than 800 mass%, or less than 700 mass%, or less than 600 mass%, or less than 500 mass%, or less than 400 mass%, or less than 300 mass%, or less than 200 mass%, or less than 180 mass%, or less than 170 mass%, or less than 160 mass%, or less than 150 mass%, particularly less than 140 mass%. The content of γ-terpinene and the total content of the straight-chain fatty acids having 6 and/or 7 carbon atoms can be measured by the above-described method. It is preferable to perform the drying treatment so that the ratio is increased (that is, the value thereof increases after the drying treatment). It is preferable that one of the ratios of a straight-chain fatty acid having 6 carbon atoms and a straight-chain fatty acid having 7 carbon atoms be a predetermined ratio described above, and it is preferable that both the ratios of a straight-chain fatty acid having 6 carbon atoms and a straight-chain fatty acid having 7 carbon atoms be, respectively, predetermined ratios described above. The relevant fatty acid may be a saturated fatty acid or an unsaturated fatty acid, and is preferably a saturated fatty acid (that is, caproic acid or hexanoic acid).

The present invention is not particularly limited as long as it dries an edible plant at any stage until the water content on a dry basis thereof is below a predetermined ratio. Specifically, the water content on a dry basis is, for example, preferably in the range of 0.5 mass% or more and less than 30 mass%. More specifically, the upper limit thereof is normally less than 30 mass%. The upper limit of the water content on a dry basis may be, in particular, less than 25 mass%, or less than 20 mass%, especially less than 15 mass%, or less than 10 mass%. On the other hand, the lower limit thereof is not limited, and can be normally 0.5 mass% or more, and in particular, 1.0 mass% or more, or 1.5 mass% or more, or 2.0 mass% or more. The water content on a dry basis can be measured by the above-described method.

The drying treatment may be performed on the composition before, during and/or after crushing treatment, and it is preferable to perform the drying treatment on the composition after crushing treatment.

Further, the present invention is not particularly limited as long as it crushes an edible plant containing γ-terpinene in a predetermined ratio in terms of dry mass (γ-terpinene-containing edible plant), and incorporates β-ionone so that the content thereof may be 0.01 ppb or more and 50 000 ppb or less in terms of dry mass. Specifically, the lower limit of the content of β-ionone is, normally, preferably 0.01 ppb or more. The lower limit of the content of β-ionone is, in particular, preferably 0.05 ppb or more, further preferably 0.10 ppb or more, especially preferably 0.50 ppb or more, or 1.00 ppb or more. On the other hand, the upper limit is not particularly limited, and is normally 20 000 ppb or less, and in particular, preferably 10 000 ppb or less, or 5 000 ppb or less, particularly preferably 1 000 ppb or less. The content of β-ionone can be measured by the above-described method.

The present invention is not particularly limited as long as it performs crushing treatment until the specific surface area per unit volume of a composition containing a dried edible plant after ultrasonication in a 2 mass% ethanol dispersion liquid is equal to a predetermined value or higher. Specifically, the lower limit of the specific surface area is, normally, preferably 0.02 $m^2$/mL or more. The lower limit of the specific surface area is, in particular, preferably 0.03 $m^2$/mL or more, further preferably 0.04 $m^2$/mL or more, especially preferably 0.05 $m^2$/mL or more, or 0.10 $m^2$/mL or more, particularly preferably 0.15 $m^2$/mL or more. On the other hand, the upper limit of the specific surface area is not limited, and is normally 2.00 $m^2$/mL or less, and in particular, preferably 1.90 $m^2$/mL or less, particularly preferably 1.80 $m^2$/mL or less. The specific surface area per unit volume of particles in the composition after ultrasonication can be measured by the above-described method.

In the present invention, the ratio of the total content of straight-chain fatty acids having 6 and/or 7 carbon atoms to the content of γ-terpinene can be relatively increased by performing drying treatment in a state in which γ-terpinene that has a relatively lower boiling point and higher volatility as compared to fatty acids and the straight-chain fatty acids having 6 and/or 7 carbon atoms are both contained. Therefore, it is preferable that the ratio of the total content of straight-chain fatty acids having 6 and/or 7 carbon atoms to the content of γ-terpinene in the composition containing a dried edible plant according to the present invention increase by a predetermined ratio or higher in terms of dry mass after the drying treatment (that is, the increase rate defined by "(relevant ratio in inventive composition after drying treatment) - (relevant ratio in inventive composition before drying treatment) / (relevant ratio in inventive composition before drying treatment)" be a certain numerical value or higher). Specifically, the ratio of increase is, for example, preferably in the range of 100 mass% or more and 100 000 mass% or less. More specifically, the lower limit of the ratio of increase is 100 mass% or more, further preferably 150 mass% or more, especially preferably 200 mass% or more. The upper limit of the ratio is not particularly limited, and may be normally 100 000 mass% or less, or 50 000 mass% or less, or 10 000 mass% or less.

The composition containing a dried edible plant according to the present invention may be produced in accordance with a usual method for producing a composition containing a dried edible plant except that the above-described specific components are incorporated so that the contents thereof are each in a predetermined range in the final composition containing a dried edible plant. For example, the composition can be produced by crushing dried raw materials, and then filling a container with the resulting powder.

As the container which is filled with the composition of the present invention, any container can be used. It is possible to use even a container which is not so much secure against degradation of the composition as contents, for example, a long-life shelf-stable storage container ensuring a shelf life of 4 months or longer after production, a container partially or fully composed of resin, a reloadable container which can be used two or more times by sealing the container opening after opening, or a resealable container which has a mechanism such as a cap or a cover and can be resealed to the extent that the contents do not leak out.

The method for storing the composition of the present invention is not limited, and may be storage at ordinary temperature, or storage under refrigeration. In particular, even if the composition is provided as a dry grocery product which is transported/stored at ordinary temperature, degradation of the composition as contents is suppressed, which is preferable.

The powdery composition of the present invention may contain another foodstuff as long as it does not interfere with the function and effect of the present invention. Specifically, such a foodstuff is a chip-shaped foodstuff or ingredient larger than 2 000 μm (2 mm), which is not the target of laser diffraction particle size distribution measurement. Examples thereof include grain puffs, dried nuts, and dried fruits, and any thereof may be used. These foodstuffs may be used alone or in any combination of two or more thereof.

In such a case, the particle size (e.g., specific surface area after disturbance) after ultrasonication is measured after removing, from the ingredients, those having a diameter of the measurement upper limit, 2 000.00 μm or more.

Examples

The present invention will now be described in more detail with reference to Examples, but these Examples are illustrative only for convenience of description, and the present invention is not limited to these Examples in any sense.

[Method for producing and adjusting composition containing dried edible plant]

In each of Test Examples and Comparative Examples, an edible plant containing γ-terpinene at 0.01 ppb or more in terms of dry mass before drying treatment (γ-terpinene-containing edible plant) was dried and crushed to prepare a composition containing a dried edible plant in which the content ratio of a γ-terpinene-containing edible plant was 100 mass%. As shown in Table 2, the edible plants used are carrot, celery, thyme and tomato as vegetables, orange, Unshu Mikan and mango as fruits, and walnut as a nut. As the carrot, Koyo No. 2 was used which contained straight-chain fatty acids having 6 and/or 7 carbon atoms at less than 10 ppb before drying and crushing.

In the drying treatment, the edible plant was crushed to a side length of 5 mm (cut into a dice shape), then blanched (final temperature: 85°C) with stirring, and then dried with hot air to a water content on a dry basis shown in Table 2 (conditions: 70°C and 5 h, multipurpose electric dryer DSK-10-1 manufactured by Shizuoka Seiki Co., Ltd.). Next, the edible plant dried with hot air was formed into a chip-shaped composition having a size shown in Table 2 (1 mesh-pass to 10 mesh-on). Thereafter, drying and crushing treatment was performed with Wonder crusher (Wonder Crusher WC-3 sold by Osaka Chemical Co., Ltd.) to prepare a powdery composition having a size (specific surface area per unit volume) shown in Table 2. Compositions obtained using carrot as an edible plant and the appearances of the compositions, among compositions of Test Examples in the table, had a hue of 5 YR to 7.5 YR, a color value of 8.0 and a chroma of 8 to 14 as defined in the Munsell Color System (JIS Z 8721).

For adjusting the contents and ratios of the components in the composition containing a dried edible plant in each of Test Examples and Comparative Examples so that the final contents and ratios reached numerical values shown in Tables 2, 3 and 4, the standard products of the scent components (γ-terpinene (CAS Registry Number: 99-85-4, manufactured by Sigma-Aldrich Co. LLC, product code: 223190), caproic acid (CAS Registry Number: 142-62-1, manufactured by Tokyo Chemical Industry Co., Ltd., product code: H0105), heptanoic acid (CAS Registry Number: 111-14-8, manufactured by Tokyo Chemical Industry Co., Ltd., product code: H0030), β-ionone (CAS Registry Number: 14901-07-6, manufactured by Tokyo Chemical Industry Co., Ltd., product code: I0077), and β-caryophyllene (CAS Registry Number: 87-44-5, manufactured by Sigma-Aldrich Co. LLC, product code: 22075)) were added to and mixed as necessary with the relevant components contained in the powdery and/or chip-shaped component.

Further, a food/drink (powdery food/drink) in the present invention was produced by mixing the sample of Test Example 35 and dietary salt at a ratio shown in Table 5, and whether the effect of the present invention was exhibited was confirmed.

As an alternative to the salt in Table 5, a liquid fat/oil (olive oil) having the same weight was provided, and the sample of Test Example 35 and the liquid fat/oil were mixed at a predetermined ratio to produce a food/drink (pasty food/drink). The composition containing a dried edible plant in each of Test Examples and Comparative Examples was subjected drying treatment so that the ratio of the total content of straight-chain fatty acids having 6 and/or 7 carbon atoms to the content of γ-terpinene increased by 100 mass% or more in terms of dry mass after the drying treatment.

[Measurement of parameters of composition containing dried edible plant]

Regarding the composition containing a dried edible plant in each of Test Examples and Comparative Examples, which had been obtained by the above-described procedure, various parameters were measured by the above-described method. Tables 2, 3 and 4 show the parameters of the obtained composition containing a dried edible plant in each of Test Examples and Comparative Examples. The symbol "-" in the tables means that calculation is impossible because the denominator is undetectable (ND < 1 ppt). For compositions having a chip shape (1 mesh-pass to 10 mesh-on), the specific surface area per unit volume is not described because the size of the composition is beyond the range of measurement by the laser diffraction particle size distribution analyzer (upper limit: 2 000 μm).

[Sensory evaluation on composition containing dried edible plant]

For the composition containing a dried edible plant in each of Test Examples and Comparative Examples, sensory evaluation was performed by the following procedure. The sensory inspectors were chosen from inspectors who were trained for the following discrimination tests A) to C) and showed particularly excellent results, had experience in product development and a wealth of knowledge about the quality of foods, such as taste and texture, and were capable of performing absolute evaluation on each sensory inspection item.

A) Taste quality discrimination test of correctly discriminating samples for five tastes (sweetness: taste of sugar, sourness: taste of tartaric acid, savoriness: taste of sodium glutamate, saltiness: taste of sodium chloride, and bitterness: taste of caffeine) from aqueous solutions produced so as to have a concentration close to the threshold of each component and two samples of distilled water, seven samples in total;

B) Concentration difference discrimination test of correctly discriminating concentration differences in five sodium chloride aqueous solutions and five acetic acid aqueous solutions having concentrations slightly different from each other; and

C) Triangle discrimination test of correctly discriminating a soy sauce of maker B from two soy sauces of maker A and the soy sauce of maker B, three samples in total.

In each of the evaluation items, all the inspectors evaluated standard samples in advance, and each score of the evaluation criteria was standardized. The sensory inspection was then performed with objectivity by 10 inspectors. That is, the 10 sensory inspectors, who had been trained on the compositions and food/drinks, performed aroma evaluation. From the standpoint of "hay-like odor", "overall evaluation" and "ripe aroma", the evaluation was performed on the basis of the criteria below. In overall evaluation, comments were also made about the pungent odor of fatty acids. An arithmetic average value of scores from the 10 inspectors was calculated, rounded off to the closest integer, and taken as a final score. By referring to a published document (Gyokai No Doko "Shomikigen Entyo" Gijutu No Kangaekata JAS Information, 503, 2-5 (2011)), the obtained test product was stored at 40°C for 10 days to prepare a sample for reproducing a degradation degree after storage at 20°C for 40 days. The hay-like odor in the sample after storage was evaluated by sensory inspection, and remarked on the comment fields in "overall evaluation" (hay-like odor during storage).

- Evaluation criteria for "hay-like odor":

The hay-like odor of each composition was evaluated on the following five-point scale.

5: Very good because the hay-like odor is not sensed at all;
4: Good because almost no hay-like odor is sensed;
3: Good although a slight hay-like odor is sensed;
2: Poor because the hay-like odor is slightly strong; and
1: Very poor because the hay-like odor is strong.

- Evaluation criteria for "overall evaluation"

The aroma balance of each composition was evaluated on the following five-point scale. Comments about "pungent odor of fatty acids" and "hay-like odor during storage" were made.

5: Very excellent quality because of particularly good aroma balance;
4: Excellent quality because of good aroma balance;
3: Somewhat excellent quality because of somewhat good aroma balance;
2: Inferior quality because of somewhat poor aroma balance; and
1: Very inferior quality because of poor 96 balance.

- Evaluation criteria for "ripe aroma"

The ripe aroma of each composition was evaluated on the following five-point scale.

5: The ripe aroma is particularly strongly sensed;
4: The ripe aroma is sensed;
3: A slight ripe aroma is sensed;
2: The ripe aroma is slightly weak; and
1: The ripe aroma is particularly weak.

Tables 2 to 8 show the results of sensory evaluation on the composition or food/drink containing a dried edible plant in each of Test Examples and Comparative Examples, which was obtained by the above-described procedure.

[Table 2]

| | | γ-Terpinene-containing edible plant | Shape | Specific surface area per unit volume after disturbance m²/mL | Crush ratio ($\gamma_A/\gamma_B$) | Number-based average diameter after disturbance μm | Water content on dry basis mass% | γ-Terpinene content ppb | Straight-chain fatty acid having 6 and/or 7 carbon atoms | |
|---|---|---|---|---|---|---|---|---|---|---|
| | | | | | | | | | Total content ppb | Fatty acid/ γ-terpinene ratio mass% |
| Test Example | 1 | Carrot | Powdery | 0.42 | 0.57 | 3.7 | 7.7% | 0.01 | 0.10 | 1 000% |
| Test Example | 2 | Carrot | Powdery | 0.42 | 0.57 | 3.7 | 7.7% | 0.2 | 0.10 | 50.0% |
| Test Example | 3 | Carrot | Powdery | 0.42 | 0.57 | 3.7 | 7.7% | 0.4 | 0.1 | 25.0% |
| Test Example | 4 | Carrot | Powdery | 0.42 | 0.57 | 3.7 | 7.7% | 5 | 0.10 | 2.0% |
| Test Example | 5 | Carrot | Powdery | 0.42 | 0.57 | 3.7 | 7.7% | 30 | 0.1 | 0.33% |
| Test Example | 6 | Carrot | Powdery | 0.42 | 0.57 | 3.7 | 7.7% | 100 | 0.1 | 0.10% |
| Test Example | 7 | Carrot | Powdery | 0.42 | 0.57 | 3.7 | 7.7% | 1 000 | 0.1 | 0.01% |
| Test Example | 8 | Carrot | Powdery | 0.42 | 0.57 | 3.7 | 7.7% | 3 000 | 0.1 | 0.003% |
| Test Example | 9 | Carrot | Powdery | 0.42 | 0.57 | 3.7 | 7.7% | 5 000 | 0.1 | 0.002% |
| Comparative Example | 10 | Carrot | Powdery | 0.42 | 0.57 | 3.7 | 7.7% | 9 000 | 0.01 | 0.0001% |
| Test Example | 11 | Carrot | Powdery | 0.42 | 0.57 | 3.7 | 7.7% | 9 000 | 0.1 | 0.001% |
| Test Example | 12 | Carrot | Powdery | 0.42 | 0.57 | 3.7 | 7.7% | 9 000 | 0.1 | 0.001% |
| Test Example | 13 | Carrot | Powdery | 0.42 | 0.57 | 3.7 | 7.7% | 9 000 | 0.1 | 0.001% |
| Test Example | 14 | Carrot | Powdery | 0.42 | 0.57 | 3.7 | 7.7% | 9 000 | 0.1 | 0.001% |
| Test Example | 15 | Carrot | Powdery | 0.42 | 0.57 | 3.7 | 7.7% | 9 000 | 0.1 | 0.001% |
| Test Example | 16 | Carrot | Powdery | 0.42 | 0.57 | 3.7 | 7.7% | 18 000 | 0.5 | 0.003% |
| Comparative Example | 17 | Carrot | Powdery | 0.42 | 0.57 | 3.7 | 7.7% | 9 000 | 0.05 | 0.0006% |
| Test Example | 18 | Carrot | Powdery | 0.42 | 0.57 | 3.7 | 7.7% | 9 000 | 0.10 | 0.001% |
| Test Example | 19 | Carrot | Powdery | 0.42 | 0.57 | 3.7 | 7.7% | 12 000 | 1.00 | 0.008% |

(continued)

| | | γ-Terpinene-containing edible plant | Shape | Specific surface area per unit volume after disturbance (m²/mL) | Crush ratio ($\gamma_A/\gamma_B$) | Number-based average diameter after disturbance (μm) | Water content on dry basis (mass%) | γ-Terpinene content (ppb) | Straight-chain fatty acid having 6 and/or 7 carbon atoms | |
|---|---|---|---|---|---|---|---|---|---|---|
| | | | | | | | | | Total content (ppb) | Fatty acid/γ-terpinene ratio (mass%) |
| Test Example | 20 | Carrot | Powdery | 0.42 | 0.57 | 3.7 | 7.7% | 12 000 | 10.0 | 0.08% |
| Test Example | 21 | Carrot | Powdery | 0.42 | 0.57 | 3.7 | 7.7% | 15 000 | 100 | 1% |
| Test Example | 22 | Carrot | Powdery | 0.42 | 0.57 | 3.7 | 7.7% | 15 000 | 1 000 | 7% |
| Test Example | 23 | Carrot | Powdery | 0.42 | 0.57 | 3.7 | 7.7% | 100 | 1 000 | 1 000% |
| Test Example | 24 | Carrot | Powdery | 0.42 | 0.57 | 3.7 | 7.7% | 20 000 | 5 000 | 25% |
| Test Example | 25 | Carrot | Powdery | 0.42 | 0.57 | 3.7 | 7.7% | 100 | 5 000 | 5 000% |
| Test Example | 26 | Carrot | Powdery | 0.42 | 0.57 | 3.7 | 7.7% | 20 000 | 10 000 | 50% |
| Test Example | 27 | Carrot | Powdery | 0.42 | 0.57 | 3.7 | 7.7% | 100 | 10 000 | 10 000% |
| Test Example | 28 | Carrot | Powdery | 0.42 | 0.57 | 3.7 | 7.7% | 55 000 | 100 000 | 182% |
| Comparative Example | 29 | Carrot | Powdery | 0.42 | 0.57 | 3.7 | 7.7% | 55 000 | 400 000 | 727% |
| Test Example | 30 | Carrot | Powdery | 0.42 | 0.57 | 3.7 | 7.7% | 9 000 | 1 000 | 11% |
| Test Example | 31 | Carrot | Powdery | 0.42 | 0.57 | 3.7 | 7.7% | 9 000 | 1 000 | 11% |
| Test Example | 32 | Carrot | Chip-shape (1 mesh-pass and 10 mesh-on) | - | - | - | 7.7% | 9 000 | 1 000 | 11% |
| Test Example | 33 | Carrot | Powdery | 0.02 | 0.38 | 29.5 | 7.7% | 9 000 | 1 000 | 11% |
| Test Example | 34 | Carrot | Powdery | 1.80 | 0.27 | 1.3 | 7.7% | 9 000 | 1 000 | 11% |
| Test Example | 35 | Carrot | Powdery | 0.42 | 0.57 | 3.7 | 7.7% | 9 000 | 1 000 | 11% |
| Test Example | 36 | Carrot | Powdery | 0.42 | 0.57 | 3.7 | 0.8% | 9 000 | 1 000 | 11% |
| Test Example | 37 | Carrot | Powdery | 0.42 | 0.57 | 3.7 | 26.0% | 9 000 | 1 000 | 11% |

[Table 3]

| | | γ-Terpinene-containing edible plant | Shape | Specific surface area per unit volume after disturbance<br><br>m²/mL | Crush ratio (YA/YB) | Number-based average diameter after disturbance<br><br>μm | Water content on dry basis<br><br>mass% | γ-Terpinene<br><br>content ppb | Straight-chain fatty acid having 6 and/or 7 carbon atoms | |
|---|---|---|---|---|---|---|---|---|---|---|
| | | | | | | | | | Total content<br><br>ppb | Fatty acid/γ-terpinene ratio<br><br>mass% |
| Test Example | 38 | Carrot | Powdery | 0.42 | 0.57 | 3.7 | 7.7% | 12 000 | 1 000 | 8% |
| Test Example | 39 | Carrot | Powdery | 0.42 | 0.57 | 3.7 | 7.7% | 12 000 | 1 000 | 8% |
| Test Example | 40 | Carrot | Powdery | 0.42 | 0.57 | 3.7 | 7.7% | 50 000 | 1 000 | 2% |
| Test Example | 41 | Carrot | Powdery | 0.42 | 0.57 | 3.7 | 7.7% | 50 000 | 1 000 | 2% |
| Test Example | 42 | Celery | Powdery | 0.10 | 0.83 | 11.6 | 15.0% | 9 000 | 0.10 | 0.0011% |
| Test Example | 43 | Celery | Powdery | 0.10 | 0.83 | 11.6 | 15.0% | 9 000 | 2 000 | 22% |
| Test Example | 44 | Orange | Powdery | 0.03 | 0.62 | 21.1 | 7.7% | 9 000 | 0.10 | 0.0011% |
| Test Example | 45 | Orange | Powdery | 0.03 | 0.62 | 21.1 | 7.7% | 9 000 | 4 000 | 44% |
| Test Example | 46 | Unshu Mikan | Powdery | 0.84 | 0.25 | 3.5 | 12% | 9 000 | 0.10 | 0.0011% |
| Test Example | 47 | Unshu Mikan | Powdery | 0.84 | 0.25 | 3.5 | 12% | 9 000 | 6 000 | 67% |
| Test Example | 48 | Mango | Powdery | 1.65 | 0.18 | 1.8 | 22% | 9 000 | 0.10 | 0.0011% |
| Test Example | 49 | Mango | Powdery | 1.65 | 0.18 | 1.8 | 22% | 9 000 | 8 000 | 89% |

(continued)

| Test Example | γ-Terpinene-containing edible plant | Shape | Specific surface area per unit volume after disturbance m²/mL | Crush ratio (YA/YB) | Number-based average diameter after disturbance μm | Water content on dry basis mass% | γ-Terpinene content ppb | Straight-chain fatty acid having 6 and/or 7 carbon atoms Total content ppb | Fatty acid/γ-terpinene ratio mass% |
|---|---|---|---|---|---|---|---|---|---|
| Test Example 50 | Walnut | Powdery | 1.71 | 0.06 | 1.8 | 16% | 9 000 | 0.10 | 0.0011% |
| Test Example 51 | Walnut | Powdery | 1.71 | 0.06 | 1.8 | 16% | 9 000 | 10 000 | 111% |
| Test Example 52 | Thyme | Powdery | 0.20 | 0.51 | 3.2 | 7.7% | 9 000 | 0.10 | 0.0011% |
| Test Example 53 | Thyme | Powdery | 0.20 | 0.51 | 3.2 | 7.7% | 9 000 | 12 000 | 133% |
| Test Example 54 | Tomato | Powdery | 0.42 | 0.57 | 3.7 | 7.7% | 9 000 | 0.10 | 0.0011% |
| Test Example 55 | Tomato | Powdery | 0.42 | 0.57 | 3.7 | 7.7% | 9 000 | 15 000 | 167% |
| Test Example 65 | Carrot | Powder | 0.42 | 0.57 | 3.7 | 7.7% | 1 000 | 5.0 | 0.50% |

[Table 4]

| | | Content of straight-chain fatty acid having 6 carbon atoms (C=6) content ppb | Content of straight-chain fatty acid having 7 carbon atoms (C=7) content ppb | C7/C6 Ratio content ratio mass% | β-Ionone | | Sensory evaluation | | |
|---|---|---|---|---|---|---|---|---|---|
| | | | | | Content ppb | β-Ionone/ γ-terpinene content ratio mass% | Hay-like odor | Overall evaluation | |
| Test Example | 1 | 0.08 | 0.020 | 25% | 1.00 | 10 000% | 5 | 5 | Hay-like odor during storage is slightly strong |
| Test Example | 2 | 0.08 | 0.020 | 25% | 1.00 | 500% | 5 | 5 | |
| Test Example | 3 | 0.09 | 0.010 | 11% | 1.00 | 250% | 5 | 5 | |
| Test Example | 4 | 0.08 | 0.020 | 25% | 1.00 | 20% | 5 | 5 | |
| Test Example | 5 | 0.1 | ND (<1ppt) | 0% | 1.00 | 3.33% | 5 | 5 | |
| Test Example | 6 | ND (<1ppt) | 0.1 | - | 1.00 | 1.00% | 5 | 4 | Pungent odor is sensed |
| Test Example | 7 | 0.03 | 0.07 | 233% | 1.00 | 0.10% | 4 | 4 | Pungent odor is slightly sensed |
| Test Example | 8 | 0.03 | 0.07 | 233% | 1.00 | 0.03% | 4 | 4 | Pungent odor is slightly sensed |
| Test Example | 9 | 0.05 | 0.07 | 140% | 1.00 | 0.02% | 4 | 4 | |
| Comparative Example | 10 | 0.01 | 0.002 | 25% | 1.00 | 0.01% | 1 | 1 | |
| Test Example | 11 | 0.08 | 0.020 | 25% | 1.00 | 0.01 % | 4 | 4 | |
| Test Example | 12 | 0.09 | 0.010 | 11% | 1.00 | 0.011% | 4 | 4 | |
| Test Example | 13 | 0.09 | 0.010 | 11% | 1.00 | 0.01% | 4 | 4 | |
| Test Example | 14 | 0.1 | ND (<1ppt) | 0% | 1.00 | 0.01% | 4 | 4 | |
| Test Example | 15 | ND (<1ppt) | 0.100 | - | 1.00 | 0.01% | 4 | 3 | Pungent odor is sensed |
| Test Example | 16 | 0.15 | 0.350 | 233% | 1.00 | 0.005% | 4 | 4 | Pungent odor is slightly sensed |
| Comparative Example | 17 | 0.04 | 0.010 | 25% | 1.00 | 0.005% | 2 | 2 | |
| Test Example | 18 | 0.08 | 0.020 | 25% | 1.00 | 0.005% | 4 | 4 | |

(continued)

| | | Content of straight-chain fatty acid having 6 carbon atoms (C=6) content ppb | Content of straight-chain fatty acid having 7 carbon atoms (C=7) content ppb | C7/C6 Ratio content ratio mass% | β-Ionone | | Sensory evaluation | | |
|---|---|---|---|---|---|---|---|---|---|
| | | | | | Content ppb | β-Ionone/ γ-terpinene content ratio mass% | Hay-like odor | Overall evaluation | |
| Test Example | 19 | 0.80 | 0.20 | 25% | 1.00 | 0.005% | 4 | 4 | |
| Test Example | 20 | 9.5 | 0.50 | 5% | 1.00 | 0.005% | 4 | 4 | |
| Test Example | 21 | 90 | 10 | 11% | 1.00 | 0.005% | 5 | 5 | |
| Test Example | 22 | 800 | 200 | 25% | 1.00 | 0.005% | 5 | 5 | |
| Test Example | 23 | 800 | 200 | 25% | 1.00 | 0.005% | 5 | 5 | |
| Test Example | 24 | 4000 | 1000 | 25% | 1.00 | 0.005% | 5 | 5 | |
| Test Example | 25 | 4000 | 1000 | 25% | 1.00 | 0.005% | 5 | 5 | |
| Test Example | 26 | 8000 | 2000 | 25% | 1.00 | 0.005% | 5 | 5 | |
| Test Example | 27 | 8000 | 2000 | 25% | 1.00 | 0.005% | 5 | 5 | |
| Test Example | 28 | 80000 | 20000 | 25% | 1.00 | 0.002% | 5 | 4 | |
| Comparative Example | 29 | 320 000 | 80 000 | 25% | 1.00 | 0.0018% | 5 | 2 | |
| Test Example | 30 | 600 | 400 | 67% | 0.05 | 0.0006% | 5 | 5 | Hay-like odor during storage is strong |
| Test Example | 31 | 600 | 400 | 67% | 0.10 | 0.001% | 5 | 5 | Hay-like odor during storage is slightly strong |
| Test Example | 32 | 600 | 400 | 67% | 1.00 | 0.011% | 5 | 5 | Hay-like odor during storage is slightly strong |
| Test Example | 33 | 600 | 400 | 67% | 1.00 | 0.011% | 5 | 5 | |
| Test Example | 34 | 600 | 400 | 67% | 1.00 | 0.011% | 5 | 5 | |
| Test Example | 35 | 600 | 400 | 67% | 1.00 | 0.011% | 5 | 5 | |
| Test Example | 36 | 600 | 400 | 67% | 1.00 | 0.011% | 5 | 5 | |
| Test Example | 37 | 600 | 400 | 67% | 1.00 | 0.011% | 5 | 5 | |

[Table 5]

| | | Content of straight-chain fatty acid having 6 carbon atoms(C=6) content ppb | Content of straight-chain fatty acid having 7 carbon atoms(C=7) content ppb | C7/C6 Ratio content ratio mass% | β-Ionone | | Sensory evaluation | |
|---|---|---|---|---|---|---|---|---|
| | | | | | Content ppb | β-Ionone/ γ-terpinene content ratio mass% | Hay-like odor | Overall evaluation |
| Test Example | 38 | 600 | 400 | 67% | 10.0 | 0.1% | 5 | 5 | |
| Test Example | 39 | 600 | 400 | 67% | 100 | 0.8% | 5 | 5 | |
| Test Example | 40 | 600 | 400 | 67% | 1 000 | 2% | 5 | 5 | |
| Test Example | 41 | 600 | 400 | 67% | 10 000 | 20% | 5 | 5 | |
| Test Example | 42 | 0.08 | 0.020 | 25% | 1.00 | 0.011% | 4 | 4 | |
| Test Example | 43 | 1 400 | 600 | 43% | 1.00 | 0.011% | 5 | 5 | |
| Test Example | 44 | 0.08 | 0.02 | 25% | 1.00 | 0.011% | 4 | 4 | |
| Test Example | 45 | 2 400 | 1600 | 67% | 1.00 | 0.011% | 5 | 5 | |
| Test Example | 46 | 0.08 | 0.02 | 25% | 1.00 | 0.011% | 4 | 4 | |
| Test Example | 47 | 3 000 | 3 000 | 100% | 1.00 | 0.011 % | 5 | 5 | |
| Test Example | 48 | 0.08 | 0.02 | 25% | 1.00 | 0.011% | 4 | 4 | |
| Test Example | 49 | 3 200 | 4800 | 150% | 1.00 | 0.011% | 5 | 5 | |
| Test Example | 50 | 0.08 | 0.02 | 25% | 1.00 | 0.011% | 4 | 4 | |
| Test Example | 51 | 4 000 | 6 000 | 150% | 1.00 | 0.011 % | 5 | 5 | |
| Test Example | 52 | 0.08 | 0.02 | 25% | 1.00 | 0.011% | 4 | 4 | |
| Test Example | 53 | 4 200 | 7 800 | 186% | 1.00 | 0.011 % | 5 | 5 | Pungent odor is sensed but is at an acceptable level |
| Test Example | 54 | 0.08 | 0.02 | 25% | 1.00 | 0.011% | 4 | 5 | |

(continued)

| | | Content of straight-chain fatty acid having 6 carbon atoms(C=6) content ppb | Content of straight-chain fatty acid having 7 carbon atoms(C=7) content ppb | C7/C6 Ratio content ratio mass% | β-Ionone | | Sensory evaluation | |
|---|---|---|---|---|---|---|---|---|
| | | | | | Content ppb | β-Ionone/γ-terpinene content ratio mass% | Hay-like odor | Overall evaluation |
| Test Example | 55 | 4500 | 10 500 | 233% | 1.00 | 0.011 % | 5 | 4 | Pungent odor is slightly sensed |
| Test Example | 65 | 4.99 | 0.010 | 0.2% | 5 000 | 500% | 5 | 5 | |

[Table 6]

| | | β-Caryophyllene/(straight-chain fatty acids having 6 and/or 7 carbon atoms) | | | Sensory evaluation Ripe aroma |
|---|---|---|---|---|---|
| | | β-Caryophyllene/(C6+C7) peak area value ratio % | β-Caryophyllene/C6 peak area value ratio % | β-Caryophyllene/C7 peak area value ratio % | |
| Test Example | 1 | 13.2% | 14.4% | 156.3% | 5 |
| Test Example | 2 | 13.2% | 14.4% | 156.3% | 5 |
| Test Example | 3 | 12.3% | 12.8% | 312.6% | 5 |
| Test Example | 4 | 13.2% | 14.4% | 156.3% | 5 |
| Test Example | 5 | 11.5% | 11.5% | - | 5 |
| Test Example | 6 | 31.3% | - | 31.3% | 5 |
| Test Example | 7 | 20.6% | 38.4% | 44.7% | 5 |
| Test Example | 8 | 20.6% | 38.4% | 44.7% | 5 |
| Test Example | 9 | 15.2% | 23.0% | 44.7% | 5 |
| Comparative Example | 10 | 131.8% | 143.9% | 1 562.9% | 5 |
| Test Example | 11 | 13.2% | 14.4% | 156.3% | 5 |
| Test Example | 12 | 12.3% | 12.8% | 312.6% | 5 |
| Test Example | 13 | 12.3% | 12.8% | 312.6% | 5 |
| Test Example | 14 | 11.5% | 11.5% | - | 5 |
| Test Example | 15 | 31.3% | - | 31.3% | 5 |
| Test Example | 16 | 4.1% | 7.7% | 8.9% | 5 |
| Comparative Example | 17 | 263.5% | 287.8% | 3 125.9% | 5 |
| Test Example | 18 | 131.8% | 143.9% | 1 562.9% | 5 |
| Test Example | 19 | 13.2% | 14.4% | 156.3% | 5 |
| Test Example | 20 | 1.2% | 1.2% | 62.5% | 5 |
| Test Example | 21 | 0.1229% | 0.1% | 3.1% | 5 |
| Test Example | 22 | 0.0132% | 0.014% | 0.156% | 5 |

(continued)

| | | β-Caryophyllene/(straight-chain fatty acids having 6 and/or 7 carbon atoms) | | | Sensory evaluation Ripe aroma |
| --- | --- | --- | --- | --- | --- |
| | | β-Caryophyllene/ (C6+C7) peak area value ratio % | β-Caryophyllene/C6 peak area value ratio % | β-Caryophyllene/C7 peak area value ratio % | |
| Test Example | 23 | 0.0132% | 0.014% | 0.156% | 5 |
| Test Example | 24 | 0.0026% | 0.003% | 0.031% | 4 |
| Test Example | 25 | 0.0026% | 0.003% | 0.031% | 4 |
| Test Example | 26 | 0.0013% | 0.00144% | 0.0156% | 3 |
| Test Example | 27 | 0.0013% | 0.00144% | 0.0156% | 3 |
| Test Example | 28 | 0.00013% | 0.00014% | 0.00156% | 2 |
| Comparative Example | 29 | 0.00003% | 0.00004% | 0.00039% | 1 |
| Test Example | 30 | 4 621.0% | 5755.5% | 23 444.0% | 5 |
| Test Example | 31 | 4 621.0% | 5755.5% | 23 444.0% | 5 |
| Test Example | 32 | 4 621.0% | 5755.5% | 23 444.0% | 5 |
| Test Example | 33 | 4 621.0% | 5755.5% | 23 444.0% | 5 |
| Test Example | 34 | 4 621.0% | 5755.5% | 23 444.0% | 5 |
| Test Example | 35 | 4 621.0% | 5755.5% | 23 444.0% | 5 |
| Test Example | 36 | 4 621.0% | 5755.5% | 23 444.0% | 5 |
| Test Example | 37 | 4 621.0% | 5755.5% | 23 444.0% | 5 |

[Table 7]

| | | β-Caryophyllene/(straight-chain fatty acids having 6 and/or 7 carbon atoms) | | | Sensory evaluation Ripe aroma |
| --- | --- | --- | --- | --- | --- |
| | | β-Caryophyllene/(C6+C7) peak area value ratio % | β-Caryophyllene/C6 peak area value ratio % | β-Caryophyllene/C7 peak area value ratio % | |
| Test Example | 38 | 4 621.0% | 5755.5% | 23 444.0% | 5 |
| Test Example | 39 | 4 621.0% | 5755.5% | 23 444.0% | 5 |
| Test Example | 40 | 4 621.0% | 5755.5% | 23 444.0% | 5 |
| Test Example | 41 | 4 621.0% | 5755.5% | 23 444.0% | 5 |
| Test Example | 42 | 13.2% | 14.4% | 156.3% | 5 |
| Test Example | 43 | 7.1% | 8.2% | 52.1% | 5 |
| Test Example | 44 | 13.2% | 14.4% | 156.3% | 5 |
| Test Example | 45 | 38.5% | 48.0% | 195.4% | 5 |

(continued)

| | | β-Caryophyllene/(straight-chain fatty acids having 6 and/or 7 carbon atoms) | | | Sensory evaluation Ripe aroma |
| --- | --- | --- | --- | --- | --- |
| | | β-Caryophyllene/(C6+C7) peak area value ratio % | β-Caryophyllene/C6 peak area value ratio % | β-Caryophyllene/C7 peak area value ratio % | |
| Test Example | 46 | 13.2% | 14.4% | 156.3% | 5 |
| Test Example | 47 | 140.2% | 191.8% | 521.0% | 5 |
| Test Example | 48 | 13.2% | 14.4% | 156.3% | 5 |
| Test Example | 49 | 231.7% | 359.7% | 651.2% | 5 |
| Test Example | 50 | 13.2% | 14.4% | 156.3% | 5 |
| Test Example | 51 | 926.9% | 1 438.9% | 2604.9% | 5 |
| Test Example | 52 | 13.2% | 14.4% | 156.3% | 5 |
| Test Example | 53 | 1 627.6% | 2740.7% | 4 007.5% | 5 |
| Test Example | 54 | 13.2% | 14.4% | 156.3% | 5 |
| Test Example | 55 | 6879.1% | 12789.9% | 14885.1% | 5 |
| Test Example | 65 | 23051.0% | 23 068.0% | 312586.7% | 5 |

[Table 8]

| | Composition containing dried edible plant | Composition content ratio | Sensory test | |
|---|---|---|---|---|
| | | mass% | Hay-like odor | Overall evaluation |
| Test Example 56 | Test Example 35 + dietary salt | 90 | 5 | 5 |
| Test Example 57 | | 80 | 5 | 5 |
| Test Example 58 | | 70 | 5 | 5 |
| Test Example 59 | | 60 | 5 | 5 |
| Test Example 60 | | 50 | 5 | 5 |
| Test Example 61 | | 40 | 5 | 5 |
| Test Example 62 | | 30 | 5 | 4 |
| Test Example 63 | | 20 | 5 | 4 |
| Test Example 64 | | 10 | 5 | 4 |

The results shown in Tables 2 to 8 reveal that when the total content of straight-chain fatty acids having 6 and/or 7 carbon atoms and the ratio of the total content of straight-chain fatty acids having 6 and/or 7 carbon atoms to the content of γ-terpinene are each in a predetermined range in the composition containing γ-terpinene in a predetermined ratio in terms of dry mass, the hay-like odor is suppressed, and the effect of the present invention is exhibited. It was shown to be more preferable that further, the ratio of the content of β-ionone to the content of γ-terpinene is in a predetermined range because generation of the hay-like odor during storage is suppressed. It was shown to be preferable that the ratio of a β-caryophyllene peak area value to a total peak area value of straight-chain fatty acids having 6 and/or 7 carbon atoms, when measured by extracting a volatile component at a sample temperature of 80°C for 20 minutes using solid phase micro extraction-gas chromatography mass spectrometry, is in a predetermined range because the ripe aroma of the composition is sensed.

For food/drinks containing the inventive composition in a certain ratio, good results were obtained as in Table 5. It was shown to be preferable that the content of the dried edible plant with respect to the composition containing a dried edible plant (whole powdery food) is in a predetermined range (10 mass% or more) because the effect is exhibited.

Industrial Applicability

According to the present invention, it is possible to provide a composition containing a dried edible plant, in which the hay-like odor after drying and crushing treatment is suppressed, an effect of suppressing the hay-like odor during storage for a long period of time is exhibited, and the composition has a well-balanced aroma. The composition is extremely beneficial in the food field.

**Claims**

**1.**    A composition comprising a dried edible plant and satisfying all of following characteristics (1) to (4):

(1) a total content of straight-chain fatty acids having 6 and/or 7 carbon atoms is 0.05 ppb or more and 200 000 ppb or less in terms of dry mass;

(2) a content of γ-terpinene is 0.01 ppb or more and 100 000 ppb or less in terms of dry mass;

(3) a ratio of the total content of the straight-chain fatty acids having 6 and/or 7 carbon atoms to the content of γ-terpinene is 0.001 mass% or more in terms of dry mass; and

(4) a water content on a dry basis is less than 30 mass%.

2. The composition comprising a dried edible plant according to claim 1, wherein a content of β-ionone is 0.01 ppb or more and 50 000 ppb or less in terms of dry mass.

3. The composition comprising a dried edible plant according to claim 1 or 2, wherein a ratio of the content of β-ionone to the content of γ-terpinene is 0.001 mass% or more in terms of dry mass.

4. The composition comprising a dried edible plant according to any one of claims 1 to 3, wherein a ratio of a β-caryophyllene peak area value to a total peak area value of the straight-chain fatty acids having 6 and/or 7 carbon atoms, when measured by extracting a volatile component at a sample temperature of 80°C for 20 minutes using solid phase micro extraction-gas chromatography mass spectrometry, is more than 0.0002%.

5. The composition comprising a dried edible plant according to any one of claims 1 to 4, wherein a ratio of a content of a straight-chain fatty acid having 7 carbon atoms to a content of a straight-chain fatty acid having 6 carbon atoms is less than 200 mass%.

6. The composition comprising a dried edible plant according to any one of claims 1 to 5, which is a ground composition in a dry-ground state.

7. The composition comprising a dried edible plant according to any one of claims 1 to 6, wherein the edible plant is a γ-terpinene-containing edible plant in which the content of γ-terpinene is 0.01 ppb or more in terms of dry mass.

8. The composition comprising a dried edible plant according to any one of claims 1 to 7, wherein the edible plant includes one or more edible plants selected from the group consisting of vegetables, fruits and nuts.

9. The composition comprising a dried edible plant according to any one of claims 1 to 8, wherein the edible plant includes an umbellifer.

10. The composition comprising a dried edible plant according to any one of claims 1 to 9, wherein the edible plant includes one or more edible plants selected from the group consisting of carrot, celery, parsley, cicely and coriander.

11. The composition comprising a dried edible plant according to any one of claims 1 to 10, wherein a specific surface area per unit volume of the composition containing a dried edible plant after ultrasonication in a 2 mass% ethanol dispersion liquid is 0.02 m$^2$/mL or more.

12. The composition comprising a dried edible plant according to any one of claims 1 to 11, wherein a ratio of a specific surface area per unit volume ($\gamma_B$) of the composition containing a dried edible plant before ultrasonication in a 2 mass% ethanol dispersion liquid to a specific surface area per unit volume ($\gamma_A$) of the composition after ultrasonication, ($\gamma_B/\gamma_A$), is 0.01 or more and 0.99 or less.

13. The composition comprising a dried edible plant according to any one of claims 1 to 12, wherein a number-based average diameter of the composition containing a dried edible plant after ultrasonication in a 2 mass% ethanol dispersion liquid is 0.1 μm or more and less than 30 μm.

14. The composition comprising a dried edible plant according to any one of claims 1 to 13, wherein a hue in the Munsell color system is from 0 YR to 10 YR, or from 0 Y to 5 Y.

15. The composition comprising a dried edible plant according to any one of claims 1 to 14, wherein a color value in the Munsell color system is less than 9.0.

16. The composition comprising a dried edible plant according to any one of claims 1 to 15, wherein a chroma in the Munsell color system is more than 4.

17. A food/drink comprising the composition comprising a dried edible plant according to any one of claims 1 to 16 at 10 mass% or more.

**18.** A method for producing the composition comprising a dried edible plant according to any one of claims 1 to 16, the method comprising: crushing an edible plant in which a content of γ-terpinene is 0.01 ppb or more and 100 000 ppb or less in terms of dry mass, incorporating straight-chain fatty acids having 6 and/or 7 carbon atoms so that a total content thereof is 0.05 ppb or more and 200 000 ppb or less in terms of dry mass and a ratio of the total content of the straight-chain fatty acids having 6 and/or 7 carbon atoms to the content of γ-terpinene is 0.001 mass% or more in terms of dry mass, and drying the edible plant at any stage until a water content on a dry basis is less than 30 mass%.

**19.** The production method according to claim 18, wherein further, the ratio of the total content of the straight-chain fatty acids having 6 and/or 7 carbon atoms to the content of γ-terpinene increases during the drying treatment.

**20.** The production method according to claim 18 or 19, wherein the crushing treatment is dry crushing treatment.

**21.** The production method according to any one of claims 18 to 20, wherein the ratio of the total content of the straight-chain fatty acids having 6 and/or 7 carbon atoms to the content of γ-terpinene increases by 100 mass% or more in terms of dry mass after the drying treatment.

**22.** A method for enhancing storability of a composition containing a dried edible plant, the method comprising: crushing an edible plant in which a content of γ-terpinene is 0.01 ppb or more and 100 000 ppb or less in terms of dry mass, incorporating straight-chain fatty acids having 6 and/or 7 carbon atoms so that a total content thereof is 0.05 ppb or more and 200 000 ppb or less in terms of dry mass, drying the edible plant at any stage until a water content on a dry basis is less than 30 mass%, and performing adjustment so that a ratio of the total content of the straight-chain fatty acids having 6 and/or 7 carbon atoms to the content of γ-terpinene in the dried edible plant is 0.001 mass% or more in terms of dry mass.

**23.** A method for enhancing storability of a food/drink containing a dried edible plant in which a water content on a dry basis is less than 30 mass%, the method comprising incorporating γ-terpinene so that a content thereof is 0.01 ppb or more and 100 000 ppb or less in terms of dry mass, incorporating straight-chain fatty acids having 6 and/or 7 carbon atoms so that a total content thereof is 0.05 ppb or more and 200 000 ppb or less in terms of dry mass, and performing adjustment so that a ratio of the total content of the straight-chain fatty acids having 6 and/or 7 carbon atoms to the content of γ-terpinene in the food/drink is 0.001 mass% or more in terms of dry mass.

Fig. 1

## INTERNATIONAL SEARCH REPORT

| | International application No. |
|---|---|
| | **PCT/JP2022/010464** |

**A. CLASSIFICATION OF SUBJECT MATTER**

***A23L 27/10***(2016.01)i
FI: A23L27/10 C

According to International Patent Classification (IPC) or to both national classification and IPC

**B. FIELDS SEARCHED**

Minimum documentation searched (classification system followed by classification symbols)

A23L27/10

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2020/136981 A1 (MIZKAN HOLDINGS CO LTD) 02 July 2020 (2020-07-02) | 1-23 |
| A | JP 2017-225417 A (AJINOMOTO KK) 28 December 2017 (2017-12-28) | 1-23 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **11 May 2022** | **24 May 2022** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

INTERNATIONAL SEARCH REPORT
Information on patent family members

International application No.

**PCT/JP2022/010464**

| Patent document cited in search report | | | Publication date (day/month/year) | Patent family member(s) | | | Publication date (day/month/year) |
|---|---|---|---|---|---|---|---|
| WO | 2020/136981 | A1 | 02 July 2020 | US | 2021/0127692 | A1 | |
| | | | | EP | 3791728 | A1 | |
| JP | 2017-225417 | A | 28 December 2017 | (Family: none) | | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017225417 A

- JP 2008295335 A

**Non-patent literature cited in the description**

- *CHEMICAL ABSTRACTS,* 142-62-1
- *CHEMICAL ABSTRACTS,* 111-14-8
- *CHEMICAL ABSTRACTS,* 99-85-4

- *CHEMICAL ABSTRACTS,* 14901-07-6
- *CHEMICAL ABSTRACTS,* 87-44-5
- **GYOKAI NO DOKO.** Shomikigen Entyo. *Gijutu No Kangaekata JAS Information,* 2011, vol. 503, 2-5